(19) Europäisches Patentamt
European Patent Office
Office européen des brevets

(11) EP 4 080 301 B1

(12) **EUROPEAN PATENT SPECIFICATION**

(45) Date of publication and mention of the grant of the patent:
**05.03.2025 Bulletin 2025/10**

(21) Application number: **21169089.6**

(22) Date of filing: **19.04.2021**

(51) International Patent Classification (IPC):
***G05B 19/4061*** *(2006.01)* ***G05B 19/4093*** *(2006.01)*
***G05B 19/406*** *(2006.01)*

(52) Cooperative Patent Classification (CPC):
**G05B 19/4061; G05B 19/406; G05B 19/4093;**
G05B 2219/36296; G05B 2219/36342;
G05B 2219/45041; G05B 2219/49143;
G05B 2219/49366

# (54) 3D TILT ESTIMATION AND COLLISION AVOIDANCE FOR LASER CUTTING

3D-NEIGUNGSSCHÄTZUNG UND KOLLISIONSVERMEIDUNG ZUM LASERSCHNEIDEN

ESTIMATION DE L'INCLINAISON EN 3D ET PRÉVENTION DES COLLISIONS POUR LA DÉCOUPE LASER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**26.10.2022 Bulletin 2022/43**

(73) Proprietor: **Bystronic Laser AG**
**3362 Niederönz (CH)**

(72) Inventors:
- **HAAS, Titus**
  **4800 Zofingen (CH)**
- **PARADZINETS, Alexandre**
  **06160 Antibes (FR)**
- **DOMAHIDI, Alexander**
  **8700 Küsnacht (CH)**
- **AMACHER, Raffael**
  **8335 Hittnau (CH)**

(74) Representative: **Schwarz, Claudia**
**Schwarz + Kollegen**
**Patentanwälte**
**Heilmannstraße 19**
**81479 München (DE)**

(56) References cited:
**EP-A1- 3 786 736**
**WO-A1-2020/064589**
**DE-A1- 102018 126 077**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 080 301 B1

## Description

The present invention relates to the field of laser cutting and more particularly to avoiding collisions between the laser cutting head and disturbing or protruding parts in order to assure that the laser cutting head is not compromised or damaged.

In particular, when parts are to be cut out of a workpiece (e.g., a metal sheet workpiece), which is placed on a support structure (e.g., a shuttle table or another working table) there is the risk, that small parts, which when having been cut out completely and which have insufficient support structure (for example a point-like support structure or which are placed on a single grate-like support structure, e.g., a grate of a working table) may tilt. Tilting scenarios are generally dependent on the position of the cut-out part on the grate and of its dimensions. When one part tilts, it tilts or cants out of the two-dimensional plane of the workpiece and may be subject of collisions with the laser cutting head when traversing the tilted part. Such collisions may lead to severe damages of the laser cutting head or may result in less quality of the rest cutting process.

For this reason, in state of the art, it is known to provide mechanisms for avoiding such tilt scenarios and to provide tools for tilt prevention.

One first approach is, to provide micro joints, which prevent the part form tilting. Disadvantage of these tools is that it takes time and impedes the automatic removal of the cut parts.

Another approach is shown in DE 10 2014 200 208 B3. This tool aims at avoiding collisions with joints or microjoints. This approach is based on an algorithm which estimates or determines a tilting height and defines a safety zone around each part. The cutting sequence is then optimized such that safety zones around a part are calculated so that the safety zones are "forbidden" to be crossed by the laser cutting head. Wear of the grate is not considered.

Another approach is to use a sensor system (optical, camera-based) to detect proactively possible collisions with the cutting head and adjust the trajectory of the cutting head in such a way that expensive damage to the cutting head and the beam cutting device may be avoided.

The document EP 3 786 736 A1 describes a method for calculating control instructions for controlling a cutting head of a laser machine. An encoded cutting plan is read and a state is continuously determined by means of sensor signals. A computer-implemented decision agent dynamically calculates an action for the cutting head to be taken next. A reward function for determining the action to be taken comprises a cutting rime, heat optimization, integral measure of the temperature, collision avoidance, or a linear function thereof with priorities as weights defined by a user.

The document WO 2020/064589 A1 describes a method for collision avoidance of a laser machining head in a machining space. A workpiece in the machining space is monitored with one or more optical sensors, and a change in an image are detected leading to a recognition whether the change comprises an object standing upright relative to the workpiece. If the object is standing upright, using a predetermined cutting plan, it is determined if there is a risk of collision. In case of a determined risk of collision, the drives for moving the laser machining head are controlled. The controlling can comprise an emergency stop or bypass. The bypass can comprise an evasive maneuver, in particular an alternative route.

The document DE 10 2018 126077 A1 describes a method of assessing positions of work pieces in nested formations. The work pieces are cut with a flatbed laser cutting machine from sheet metal as raw material. The aim is to improve a nesting plan in realtime during the cutting process. A reduction of tilted parts and corresponding disruptions of the cutting process is aspired for, and a tilt using the positioning of work pieces between peaks of a support rack is estimated.

Another problem is that the grate of a working table is subject to wear over time. Then, the tips of the grate are no longer in the same plane when seen from a side view, but the upper part of the tips of the grate have protrusions. Therefore, a part which has been cut and which is supported on such a grate with wear, is more likely to tilt, because the different, parallel extending grates and their tips may have different heights and, thus, support function is impaired. Thus, it would be helpful to provide a tool which also considers the wear of a support structure for determining a tilt risk.

Still another approach is disclosed in US 6 609 044 B1. Here, the trajectory of the laser cutting head is classified in two classes: high risk (where collisions may lead to severe damages at the cutting head), and low risk, wherein high risky portions are defined as the portions which are executed with high velocity (e.g., straight or linear movements) and the less risky portions are defined as the portions with low velocity (e.g., curves).

The present invention has the object to provide a laser cutting system which is safer and more reliable. In particular, it would be helpful to provide an improved mechanism for facilitating the processing of parts with a high packing density on the workpiece, and for parts which are nested in other parts to be cut with high precision of the cutting edges and small tolerances. Furthermore, an accurately estimated tilting risk should be used and considered when generating instructions for controlling the movement of the laser cutting head for cutting, such as collisions are avoided.

This object is achieved with the subject matter of the appended independent claims. Further embodiments, features and/or advantages of preferred embodiments are mentioned in the dependent claims and in the following description.

Further, it is to be pointed out that software typically is modular in nature. Thus, a specific implemented feature which is mentioned in combination with a certain embodiment may also be combined with other features, even when mentioned in other embodiments. Accordingly, any feature may be combined with at least one other feature, which is claimed and/or described in this application.

In the following, the invention is described with respect to the claimed method for estimating a tilt state of parts which are to be cut-out of a (e.g., sheet metal) workpiece by means of a laser cutting head of a laser machine. Features, advantages or alternative embodiments mentioned with respect to the method can also be assigned, transferred or, applied to the other claimed or described subject matters (e.g., tilt estimator, controller, and/or the computer program or a computer program product) and vice versa. In other words, the subject matter of the apparatus or system can be improved or further developed with features described or claimed in the context of the method and vice versa. In this case, the functional features of the method are embodied by structural units of the system, configured to dedicatedly execute this function and vice versa, respectively. Generally, in computer science at least from a computational point of view, a software implementation and a corresponding hardware implementation are equivalent. Thus, for example, a method step for "storing" data may be performed with a "storage unit" and respective instructions to write data into the storage. For avoiding redundancy, these embodiments are not reiterated or explicitly described again for the apparatus, because they have been described already in relation to the method.

The order, according to which the steps of the method of the present invention are described in the present specification, does not necessarily reflect the chronological order, according to which said steps are carried out.

According to a first object, the present invention relates to a method for estimating a tilt state of parts which have to be cut out of a workpiece by means of a laser cutting head of a laser cutting machine. The workpiece and the parts which are to be cut out from the workpiece are placed on a support element of a support structure. In a preferred embodiment, sheet material (e.g., metal) is used as workpiece in form of a mainly two-dimensional plate, which is placed on a working table, e.g., a shuttle table with a grate-like structure. Preferably, the method is computer-implemented. Alternatively, or in addition, the method may also be provided as an embedded system in a hardware module.

The method according to the invention is defined in claim 1.

The method has several advantages. It is possible to improve performance of laser cutting, because the trajectory may be optimized such as both of the following is achieved: detours, being too expensive from a performance perspective (e.g., being too long) may be avoided and detours, being too expensive from a safety perspective (e.g., being too short) may also be avoided. So, the actual tilting state as well as the individual part's specific geometrical settings may be taken into account when assessing the tilt risk and providing mechanisms for collision avoidance based thereon. As another advantage, it is possible to exactly measure the actual tilt state of the parts of the workpiece. Further, by measuring the actual tilt state an online mapping between actual measured tilt state and mathematically estimated tilt state may be provided. This helps to improve the mathematical algorithm and/or a model used therein of the tilt estimator (used for executing the preprocessed probability function) and to optimize the cutting procedure. In addition, the position and/or orientation of the workpiece (e.g., sheet metal) on the working table, or in particular, shuttle table, can be determined. In prior art, if the sheet is placed manually, it is difficult to place the sheet exactly on the cutting grid so that the offline tilt estimation is correct. Therefore, with this invention, regardless of the sheet size and position, the method allows for collision avoidance.

Moreover, technical knowledge and correct estimation of the actual tilt state (3D pose of the part) is also advantageous for subsequent processing steps, such as sorting. In particular, a sorting system with additional degrees of freedom in the sorting head (e.g., cartesian bridge system + 3D sorting head or sorting tool) may be controlled specifically with respect to the tilt scenario. Also, in case of impossibility of automatic gripping, the parts may be scheduled for a new cut.

Generally, the sorting system may use different types if grippers:

1) Suction cups,
2) Magnetic heads, and/or
3) "Pincer-like" grippers

If no parts are tilted, a conventional gripper (1,2) can be used which is more efficient than a 3D gripper (3). With a 3D gripper, depending on the part, it is not possible to sort parts that are lying flat, which is why it is necessary to switch between a 3D gripper and a conventional gripper (loss of time). Only a gripper that can grip a part inside (inner contour) and outside would be less disadvantageous. Thus, the selection of the appropriate gripping tool may improve performance. The tilt estimator according to the invention may be used to control a sorting system in that the step of gripping tool selection is executed in response to the result of the tilt estimator or the calculated probability-assigned tilt volume.

In the present invention the method is used for collision avoidance for the laser cutting head when controlling the same in connection with a laser cutting process. "In connection" here means that the process of collision avoidance may not only be used during laser cutting itself, but also in part for other related processes, like for example preparation steps, for instance, driving or executing the trajectory as preparation steps without cutting or for subsequent processes, like sorting the cut parts from the working table. The method may comprise the following method steps:

- Accessing an instructor for determining instructions for controlling the laser cutting process, wherein accessing is executed with (or in response to) the calculated probability-assigned tilt volume. "With" in this respect means that the calculated probability-assigned tilt volume (a multidimensional data set) is used as input for accessing the instructor. With other words, accessing the instructor is executed "in response to" the result data of the tilt estimator.
- The (determined) instructions comprise issuance of:

  - A - sequencing instructions for generating a modified sequence for the parts to be cut (while not changing the nesting and while not crossing a collision risky area). With this means (issuing the sequencing instructions) the sequence for cutting the parts is amended such as the laser cutting head is prevented from traversing or crossing risky areas (in particular, areas, which have been determined to have a tilting risk). In addition, or alternatively
  - B - detouring instructions may be provided. Detouring instructions are configured for controlling a set of drives, in particular, comprising drives in X-, Y- and Z-direction, for laser cutting head movement according to a three-dimensional trajectory for collision-avoidance free cutting head movement. Preferably, when issuing detouring instructions, the nesting is static and is not changed. Thus, some parts do have a tilting risk and for these parts, the cutting head is moved differently so that crossing of risky areas with the presumably tilted parts is avoided. The detouring instructions are calculated such that the calculated, probability-based tilt volume is taken into account for generating a new trajectory which prevents the laser cutting head from colliding with presumably tilted parts. In a first embodiment, the detouring instructions are calculated such that the probability-assigned tilt volume is void or small (optimization with respect to safety). In a second embodiment, the detouring instructions are calculated such that the probability-assigned tilt volume may be above the value "0" and below a configurable upper threshold (optimization e.g., with respect to performance). In case an optimization with respect to performance should be applied, another security zone or safety margin around the tilt volume may be defined. Further, there exist two options for calculating the detouring instructions: first, the detouring comprises a head- up movement of the laser cutting head so that the presumably tilted part is overdriven or run over in sufficient height to avoid collisions; and/or second, the detouring comprises no head-up movement of the laser cutting head, but instead comprises detours in the two-dimensional plane of the workpiece so to circumvent or drive around the presumably tilted part. In another preferred embodiment, the detouring instructions will be calculated by means of an optimizer, which is controlled by configurable and thus variable optimization criteria (energy, safety, time, excitation/vibration). For this purpose, there is provided a button on a user interface, so that a user may configure which of the interdependent different optimization criteria he or she may prefer to be applied. In addition, or alternatively
  - C- nesting instructions may be provided. Nesting instructions are configured for generating a modified nesting for future cutting tasks. Preferably, the means of generating nesting instructions is applied for next workpieces to be cut and thus for future cutting processes and not for the instant and actual cutting process. However, in another embodiment, it is also possible to apply the nesting instructions already to the actual workpiece, which is processed and which is provided on the working table. In this case, the cutting plan may be amended to provide an amended nesting for the parts which still need to be cut by taking into account the result of the tilt estimator, namely the probability-assigned tilt volume. For example, if the tilt estimator has calculated the tilt risk, being > 0 for parts A, D, and G, then exactly these parts A, D, and G will be positioned differently on the workpiece so that the probability-assigned tilt volume becomes 0. The amended cutting plan with the amended nesting may be forwarded to the tilt estimator iteratively as long as the tilt risk is above 0.

In a preferred embodiment, the tilting risk is calculated by considering wear of the grate of the support structure. The support structure may be a working table, in particular a shuttle table (which may comprise two tables, wherein one of them is in the laser for cutting and one is in a loading/unloading state). The wear of the grate may preferably be detected automatically by means of a set of optical sensors. The wear of the grate is considered by the tilt estimator and in particular by the probability function for the algorithmic calculations of the probability-assigned tilt volume.

The probability function is based on the consideration that parts may tilt differently, depending on their positioning on the grate and/or applied gas pressure and/or further cutting environmental conditions. For example, a specific oval part may tilt around its traverse or its longitudinal axis or others. Further, the part may tilt partly or completely. The part may rest in an angled position on the working table or may fall through the grate. The part may tilt differently over time, so the part may be in a first tilt state at a first point in time and may be in a second tilt state at a second point in time during the cutting process, e.g., while the cutting head proceeds over the cutting contour. Problematic are mainly workpiece parts of smaller to medium dimensions (e.g., 50-400 mm in length) and thin to medium workpiece thicknesses (e.g., up to 8 mm thick), as well as workpieces that have larger inner contours or a complex outer contour. These considerations are reflected in the mathematical calculations of the probability function.

In another preferred embodiment, the method comprises detecting an (actual) tilt state of a set of parts (one or more parts of the workpiece) by means of a detector and providing a feedback signal, indicative of the actual tilt state. In addition, or alternatively, the feedback signal may be used for updating (correcting) the calculated probability-assigned tilt volume. This embodiment has the technical advantage that it is possible to provide correction measure for correcting the estimated and thus the calculated tilt state with the real and actual, i.e., measured (detected) tilt state.

In another preferred embodiment, the feedback signal may be used for updating the preprocessed probability function. The technical effect is that the feedback signal can be used to improve the tilting estimation and in particular the probability function (learning). The probability function is a kind of tool with some additional hidden parameters ("hidden" parameters are parameters in addition to those we can measure, like position of the part, theoretical position of support pins, part geometries etc.). The hidden parameters can be determined or calculated by a computing entity fully automatically. The hidden parameters can be for example a deviation of cutting grate pin position from the theoretical ones (distribution), its form (e.g., is there some metal deposit), tolerances, machine wear state (which may change its dynamics when moving away from the part). When the observation of the real tilting state is provided, it is possible to fit the model with the reality by fitting those unmeasured parameters. For fitting, in addition or as an alternative, known model fitting approaches may be used (similar to supervised learning).

In still another preferred embodiment, the feedback signal is used for online adaption of the instructions, in particular of the detouring instructions, the sequence instructions and/or the nesting instructions, so that the cutting head is instructed with adapted instructions for a remaining rest of the cutting process of the workpiece on the basis of the detected tilt state. "Online" is to be construed as being effective for the still unprocessed portion of the very part which is currently cut and which is currently positioned on the working table or on another support structure of the laser machine. "Offline" in this respect refers to applying the generated instructions for later cutting of subsequent workpieces.

In still another preferred embodiment, the tilt state and/or other collision risks is/are detected by using an optical sensor system, in particular a camera system (e.g., a set of time of flight /ToF cameras or a stereo camera or multiple cameras) and/or a lidar system and/or a sonar sensor system.

In another preferred embodiment, the sensors (e.g., optical, lidar, sonar etc.) are additionally used for detecting a state of the nozzle. This is of particular advantage, after a collision of the nozzle with a tilted part or with other colliding components. The advantage is, that no other sensor system is necessary for detecting the nozzle's state and that feedback may be provided on how much quality of the further cutting process may be diminished due to the collision. Accordingly, further measures may be initiated automatically (nozzle change, interrupt or stop of cutting process etc.).

Sensor data may be used for quality check, predictive maintenance, anomaly detection as well.

Preferably, multiple cameras and/or ToF cameras are used for also covering space, which is hidden by e.g., mechanical parts of the system (gantry, bridge, cutting head etc.). A ToF camera (ToF: Time of flight) is a range imaging camera system employing time-of-flight techniques to resolve distance between the camera and the subject for each point of the image, by measuring the round-trip time of an artificial light signal, which may be provided by e.g., a laser or an LED.

In still another preferred embodiment, the probability function may be preprocessed and/or may be executed prior to cutting in an offline mode and/or wherein updating the probability function is executed online during the course of cutting or thereinafter.

In still another preferred embodiment, the detouring instructions are implementing the three-dimensional trajectory for collision-avoidance free cutting head movement, which is calculated by an optimizer module, wherein the optimizer module is controlled by a set of optimization criteria, wherein all the optimization criteria of the set of optimization criteria may be configured or set or adjusted in common by means of providing a selection signal on a multi-modal button on a user interface.

The multi-modal button may be configured for input of multiple interdependent variables. The variables are optimization variables and may comprise time, energy, safety, vibration and/or others. Depending on the user selected optimization criteria, different three-dimensional trajectories for collision-avoidance free cutting head movement are calculated. In a first setting, the user may select at least one of the optimization criteria A (e.g., safety) to be most relevant, which may result in a detouring trajectory which results in an increased safety zone around the calculated tilt volume to avoid crossing of possibly tilted parts, whereas in a second setting, the user selects another optimization criteria B (e.g., time/-efficiency/performance) to be most relevant. In the latter case, a detouring trajectory may be provided as result which may have shorter detours (smaller safety zone around the tilt volume). For example, in a third setting, the user may select energy consumption as predominant criteria. Then, completion time for the cutting process may take longer so that performance may be reduced.

In still another preferred embodiment, the detouring instructions comprise Z-axis changes of the cutting head (with head UP and head DOWN instructions) or are without such Z-axis changes according to received optimization criteria.

In a preferred embodiment, the transitions between up and down movements of the laser cutting head are calculated taking into account the dynamic limits of the laser machine (speed, acceleration, jerk) that can be set by an operator. Accordingly, there are no jumps in the height position. For example, the dynamic limits can be greater when lifting off the (sheet) workpiece than when lowering onto the (sheet) workpiece in order to reduce/-prevent potential collisions/contacts with the sheet.

In the present invention the probability-assigned tilt volume is calculated by taking into account cutting properties and wherein in another preferred embodiment the cutting property is a kerf width, and wherein the probability-assigned tilt volume is calculated by taking into account further cutting properties, optionally comprising a gas pressure.

In still another preferred embodiment, machine dynamics of the laser cutting head and/or wear of support elements of the support structure are considered for calculation of the probability-assigned tilt volume.

The optimization module is configured to execute an optimization algorithm. The optimization algorithm is able to optimize a set of different optimization criteria for providing or calculating an optimal trajectory by e.g., minimizing the positioning time (and/or energy and/or machine excitation and/or machine vibration) considering the constraints (dynamic limits of axes, tolerance space).

Detecting the wear of grate is important for a reliable estimation of tilting state. Wear detection can be provided by the operator or automatically by a sensor system. So, both of the following alternatives are provided:

- Measure the state of wear by the sensor system; Use this information to update the probability function and/or the probability-assigned tilt volume.
- Use the wear information in the preprocessing step. Check the wear after each cutting plan execution and if a significant change is detected recalculate the probability-assigned tilt volume and/or the trajectory for laser cutting head movement.

In another preferred embodiment, the result of the tilt estimator with the tilting risks of all parts is processed further algorithmically. The further processing may comprise providing a virtual representation of the estimated titling states. The virtual representation may be a graphical (or schematic) representation with the potentially tilting parts (result of the tilt estimator) and their related tilting risks (may be represented as annotations). In a simple form, the tilting risk may only be output by means of a warning signal, in case a tilting risk is estimated which is above a configurable threshold. Preferably, this virtual representation is provided on a user interface. Preferably, the virtual representation is provided prior to starting the cutting process in order to be able to verify the cutting plan or to reject it or to correct the procedure. The virtual representation may be stored and may provide an automatically generated documentation of the collision avoidance and/or tilt estimation procedure carried out by the computer program of a computing entity.

In another aspect the invention relates to a controller according to claim 12.

In a preferred embodiment, the instructions further comprise:

- sequencing instructions for generating a modified trajectory by means of changing the sequence of the parts to be cut, while not changing a nesting and while not crossing an area, which has been determined to have a tilting risk, such that the laser cutting head is prevented from traversing or crossing areas which have been determined to have a tilting risk; and/or
- nesting instructions for generating a modified nesting, by amending the cutting plan to provide an amended nesting for the parts which still need to be cut by taking into account the result of the tilt estimator, namely the probability-assigned tilt volume.

In another aspect the invention relates to a computer program comprising a computer program code, the computer program code when executed by a processor causing the processor to perform the steps of the method as mentioned above.

In the following a definition of terms is given: Generally, a collision risk exists when a collision between the cutting head positioned at a cutting height (operative height for cutting) or positioned in a transfer height, being too low (non-operative height having too little distance between cutting head and workpiece) and the respective or associated tilted part can occur (usually, after the part has been cut out completely and is free to tilt).

A tilt or tilting "state" represents or refers to a tilting scenario and/or a tilting probability. A tilt state, thus, relates to a physical spatial orientation / positioning of objects (here: parts). A state may e.g., be "tilt" or "not tilt" or may indicate a tilting angle as well. A tilt state may relate or belong to a part which has not been cut yet (whose state is estimated prior to cutting) and may relate to a part which has already been cut and for which its tilt state may be measured (e.g., by an optical sensor). According to an embodiment, both types of states may be subject to further processing, such as the estimated tilt state may be compared with the measured tilt state. The result of the comparison may be used for e.g., fitting the model and/or model optimization.

Parts within the plane of the workpiece are not tilted, whereas parts which protrude from the plane of the workpiece and extend above the workpiece are referenced as titled or being in a tilt state. Depending of the dimensions of the part, the tilt height and thus the tilting volume differs. Further, depending on the contours, geometrical data center point and support on the support structure (grate) the probability that the part may tilt in a specific angle between 0 and 90° or even 180° (and thus an associated or related height) also differs. For example, if a part is placed on several (more than one) grates, the probability that the part will tilt after cutting is very low or may be estimated even with 0, whereas if a part is placed only on one support grate, which is placed out of the center of the part, then the probability may be estimated as high. The probability function is configured to take this into account.

It should be noted, that the fact of probability actually appears because of incertitude of the model compared to the real world. If we knew all parameters exactly like the exact detailed actual shape of the cutting grate, exact cutting parameters (nozzle state, exact pressure), exact trajectory how the machine will go away from the part after cutting - it would be possible to simulate the exact kinematics of the part and its final expected state. But in real case we have a lot of assumptions where the measurements and theoretical knowledge are having some uncertainty. A typical example is a position of cutting grate pin. In an ideal world we would know the exact X, Y dimensions and height of the pin. In reality X, Y and height are actually random variables with unknown distribution where we can more or less have the mean and standard deviation values. In the example where the position of a support pin is a random variable with some probability density function (e.g., 2D Gaussian), let's denote this density function as $f(x, y)$. Then let's imagine a binary function $T(x, y)$ which equals to 1 when part theoretically tilts if the real position of the support pin is situated at x, y, and 0 otherwise. In that case the probability of the part to tilt can be calculated as a double integral over x and y from f $(x, y)\ T(x, y)\ dx\ dy$. By definition, this probability will be equal to 1 if $T(x, y)$ is always 1 (part always tilts) since integral of $f(x, y)$ is 1.

The support structure serves to support the workpiece during the cutting process. In a first embodiment, the support structure preferably is a working table. The support structure may be a movable shuttle table with two sections, one for loading and one for cutting inside the laser cutting machine. The support structure comprises support elements, for instance in the form of a grate, having grate elements, which are mainly extending in parallel to each other and which have prongs or teeth or tips when seen from a side view. Usually, the grate structure with its prongs shows a uniform and consistent height for providing an optimal support for the workpiece. Due to the wear of some grates, the height may differ from grate to grate and prong to prong / tooth to tooth and thus impedes the support function. Therefore, the present invention suggests to consider the wear of the grates in order to estimate a tilt state more accurately.

The tilt state is calculated by an algorithm automatically. The tilt state is calculated by a probability function. The tilt state is preferably calculated for each part. Alternatively, it may be configured for that tilt estimation is not executed for each part of the workpiece but only for these parts, which have been determined as relevant (e.g., due to their dimensions).

Preferably, the tilt estimator is implemented in software. In addition, or alternatively the tilt estimator may be provided as hardware module. The tilt estimator is configured to have implemented thereon an executable preprocessed probability function.

The probability function calculates all possible tilting states of the parts to be cut. Input of the probability function is at least the received position data, and optionally other geometrical data.

The probability function may be preprocessed. This means, that the mathematical calculations and rules, implemented in the probability function are determined in a preceding preparation phase. The probability function may be amended independently (independent of the execution of the tilt estimator). The probability function may be based or may apply a Monte Carlo Simulation of the part's behavior. The probability function takes into account the geometrical data and position data and the relative position of the parts to be cut with respect to the support elements (e.g., grate) of the support structure. In a preferred embodiment, the probability function further takes into account the wear of the grate. The wear of the grate is determined automatically, in particular by using a sensor system, for instance an optical system, e.g., a camera system. The wear state of the support structure may be determined shortly before the workpiece is loaded on the working table. In addition, or alternatively, the wear state of the support structure may be determined during cutting. This may be done by detecting the grate through an opening of the workpiece, for instance through the opening, provided by a tilted part. Alternatively, or in addition, it is possible that the wear state can also be set manually. For example, through a user interface input. In particular, the grate may be represented in an image and user interface elements are provided for each grate or even for each tip or prong of the grate via which you can click on the grate tips that are worn to mark them as being in a wear state.

Receiving the cutting plan is to be construed as electronically reading-in a cutting plan. This may be executed via an interface. Alternatively, the cutting plan may be provided locally, in particular on the same control unit on which the collision avoidance is implemented. Alternatively, or in addition, the cutting plan may be input and/or determined and/or updated locally and/or manually (via a user interface).

The cutting plan may comprise or may be linked to geometrical data. Geometrical data is an electronic data set. Geometrical data are representing a size, dimension, contour, thickness and/or weight of the part to be cut. Optionally other material parameters may be provided, like material type, specific gravity. Geometrical data preferably comprise position data.

The cutting plan comrpises position data. Position data is an electronic data set. Position data represent how the part to be cut out is placed on a support element of the support structure. Position data represent the relative positioning and/or arrangement and/or orientation of the part to be cut (according to the cutting plan) vis-à-vis the support element (e.g., grate) of a support structure (e.g., working table). Given the geometrical data, it is mathematically possible to calculate the risk of tilting of the part, based on its position on the support element (e.g., grate) of the support structure in case the part would be completely cut out and is free to move with respect to the rest of the workpiece. In particular, a tilting risk is calculated based on tilting properties and/or the geometrical data, and/or material parameters, and/or position data. For example, the tilting risk is determined by considering contour, dimensions, weight, gas pressure, positioning of the part on the grate of the support structure and/or further tilting relevant parameters. A tilting risk is represented by a three-dimensional space, which is calculated over each part area and wherein each voxel therein represents a probability that the part when tilted (is transferred in a tiled state) will take that point in space. The tilting risk and/or a tilt state is dynamic over time.

The cutting plan usually but not necessarily may comprise sequence data. Sequence data comprises information, indicative of the sequence for cutting the parts. Sequence data, for example, determine when the parts are to be cut, like part A, part C, part F, part B, part D etc. Thus, the parts are ordered according to their cutting sequence. In a preferred embodiment, the sequence data are stored and provided in the same file as the cutting plan with the geometrical data (NC code). Alternatively, the sequence data may be provided in a separate file, which is linked to the cutting plan so that sequence data may be updated or changed independently from other instances of the cutting plan (e.g., nesting data). However, it is also possible that the sequence data is provided in the same file as e.g., the geometrical data.

The cutting plan may comprise or may be linked to nesting data. Nesting data is an electronic data set. Nesting data are representing the arrangement of the parts to be cut out of the workpiece. Nesting data define the placement of the part to be cut-out with respect to the other parts to be cut. Nesting data are defining, where a part which is to be cut, is positioned on the workpiece. The aim of the nesting data is to optimize the number of parts which may be cut from the workpiece and/or to minimize the residual workpiece. Nesting data may reflect a cutting pattern and/or a nesting of parts to be cut.

The geometrical data may be provided in the same file as the sequence data, but can also be in a different one or the sequence data can be overridden by the machine's algorithm. The nesting data can be explicitly included but can also be deduced from the cutting plan (NC program). Apart from an insertion point and rotation there are also scaling factors (X and Y). In order to calculate tilt volumes, in a preferred embodiment, it is required to provide the following elements:

- Part geometries,
- Part nesting position,
- Cutting grate geometries (e.g., support points, theoretical or measured by the machine with any kind of sensing, wear state of the cutting grate including or not molten material accumulation, stuck small waste parts from previous cuts etc.), and/or
- Position of the cutting plan relative to the cutting grate, and/or
- Material density and thickness and/or
- Cutting parameters which include at least the gas type and pressure together with nozzle type and diameter. Information about machine dynamics (how quick the machine moves the head away from the part) could also be used for tilting estimation.

Not all data has to be provided in one file. The data can be distributed over different data sets. For example, the material properties do not have to be integrated in the cutting plan, but can be available in a separate database.

It shall be understood that a preferred embodiment of the present invention can also be any combination of the dependent claims or above embodiments with the respective independent claim.

These and other aspects of the invention will be apparent from and elucidated with reference to the embodiments described hereinafter.

## BRIEF DESCRIPTION OF THE FIGURES

Fig. 1 is a schematic representation of a workpiece, provided on a support structure with different parts to be cut out in a predefined sequence according to a preferred embodiment of the present invention;

Fig. 2 is another schematic representation of more complex parts to be cut out of a workpiece, which are positioned on a grate of a support structure;

Fig. 3a and

Fig. 3b represent exemplary images of a workpiece with different parts to be cut out, wherein the parts show different tilting states: In Fig. 3a: no tilting state and Fig. 3b: with some parts, being tilted differently;

Fig. 4a is schematic representation of three parts within workpiece, provided on a grate of a working table which do have a tilting risk and collision avoidance is required;

Fig. 4b is a schematic representation of an optimized trajectory, calculated by the instructor according to a preferred embodiment of the present invention;

Fig. 5a-d is a schematic representation of a human machine interface for adapting the optimization criteria, wherein

Fig. 5a shows an example with 4 competing optimization criteria;

Fig. 5b shows an example, where time is selected as predominant optimization parameter;

Fig. 5c shows another example, in which safety and energy consumption should serve as predominant optimization parameters;

Fig. 5d shows another example, in which machine vibration and/or machine excitation and energy consumption should serve as predominant optimization parameters.

Fig. 6 is a schematic representation of different tilting states with different assigned tilting probabilities for our cut part;

Fig. 7a is another schematic representation of a scenario having a tilting risk and a related collision risk;

Fig. 7b is a schematic representation of applied sequence instructions, where the cutting sequence has been modified according to an embodiment of the present invention, when used for collision avoidance;

Fig. 7c is another schematic representation of applied nesting instructions, which have been calculated according to an embodiment of the present invention, when used for collision avoidance;

Fig. 8a is a schematic representation of a wear state observer which may be used by a tilt estimator for determining a wear state of the cutting grate and

Fig. 8b shows by way of example a wear state of the grate of the support structure, partly with melt adhesion, which may also lead to tilting problems and collision risks;

Fig. 9 shows a schematic representation of a system for collision avoidance with a tilt estimator and an instructor;

Fig. 10 is a flowchart of a preferred embodiment of a method for estimating a tilt state of part and collision avoidance according to the invention;

Fig. 11 is a picture representing a laser cutting head being moved over the parts of the workpiece.

DETAILED DESCRIPTION OF EMBODIMENTS AND FIGURES

The present invention relates to three-dimensional collision avoidance in metal sheet cutting by means of a laser system. As a prerequisite for automatically calculating and/or initiating measures for collision avoidance it is necessary to determine the risk of collisions between the laser cutting head and objects, in particular parts, which have already been cut completely and which, for instance, are positioned on a grate of the support structure such as the completely cut part tilts and projects out of the two-dimensional plane of the workpiece. Such tilted parts may be subject to collisions with the laser cutting head, when the laser cutting head moves along its trajectory and crosses or traverses the tilted part.

**Fig. 1** shows by way of example a schematic shuttle table or working table WT as an example of a support structure which extends in the X - and Y axis and comprises a plurality of pronged grates G, extending in the X axis and having a number of prongs 10, extending in Z-axis direction. The grate structure is represented in figure 1 with the horizontal dashed lines. As can be seen in the example, shown in figure 1, five parts P need to be cut out of the workpiece WP in the form of a metal sheet, placed upon the grate structure of the working table WT.

In the example, shown in figure 1, part 1 has a high probability of tilting due to its position on the grate G and its dimensions. In particular, part 1 is only supported by one single support element and may therefore tilt with a high probability. The same holds for part 4 (high tilting probability), whereas parts 2, 3 and 5 only show a minor probability of tilting.

**Figure 2** shows another example of more complex parts P to be cut out of the workpiece WP, being placed on the grate G. The arrows shown in figure 2 represent the cutting sequence in order to avoid problems, for instance collisions, during the cutting process. As can be seen, the parts P may be nested such as the more comprehensive and complex first part may comprise a contour itself, which has to be cut out of the first part. The arrows in Fig. 2 represent the cutting sequence.

**Figure 3a and 3b** are images of a workpiece WP, being positioned on a grate G with its prongs 10 of the working table WT. In Figure 3a, the grate G is in good condition, whereas the grate G in figure 3B shows wear, which might become problematic in terms of tilting, because rest structures may be attached to and/or on the grate G, so that some prongs 10 or teeth have another height than the rest of the teeth.

**Figure 4a** is a schematic representation of parts P to be cut according to a normal cutting plan cp in the sequence, indicated by the numbers: first part 1, second part 2 and third part 3. As can be seen in Figure 4A, the cutting plan cp with a portion representing the cutting sequence is not optimized, so that there is the risk that part 1 may tilt after it has been cut free. So, when the cutting head H then moves on to part 2 and then is intended to proceed to part 3, it can be seen that the trajectory as defined in the cutting plan cp implies to traverse or cross over part 1 again, which has a tilting risk. So, in this scenario, without further collision avoidance measures, the laser cutting head H may collide with the tilted part and may be damaged or shift the workpiece WP and/or parts P. In the normal setting, and without any collision avoidance measures, the Z position of the laser cutting head H would remain the same. This is represented in Figure 4a in the downward part of the figure with respect to the axis of coordinates: no such z-axis changes and no detours are provided. In this respect, it is to be noted that by moving the workpiece, the relative positions between the parts P may no longer be correct (e.g., hole spacing). Depending on the cutting requirements, it may be that part 1-3 is waste material and the remaining sheet is the cut part.

**Figure 4b** is another schematic representation of the same scenario, mentioned above with respect to Figure 4a, with the difference that the cutting plan has been optimized. In particular, the movement of the laser cutting head H has been amended, as can be seen in the downward part of figure 4B with respect to the representation of the axis of coordinates.

Thus, according to an option of the solution of the present invention, an instructor INS may be accessed in order to determine instructions for controlling the laser cutting process and in particular the laser cutting head movement differently. In this case, shown in Figure 4B, detouring instructions may be calculated which lead to another trajectory for the movement of the cutting head H. In this case, the laser cutting head H is moved along an amended trajectory (as defined by the detouring instructions) which comprises a Z axis movement (UP) in the area above the part 1, for which a probability-assigned tilt volume *prob-vol* and thus a tilting risk has been calculated.

However, it has to be pointed out, that the above-mentioned option with the calculation of detouring instructions is only one of several options, which can be provided by the instructor INS.

According to the invention a plurality of solutions is provided, if the instructor INS is configured to calculate detouring instructions. First, the detouring instructions may comprise detours in the plane of the workpiece WP, i.e., in the X axis and Y axis, without any Z axis changes. Second, the detouring instructions may comprise detours with set axis changes and thus with head-up movements for the laser cutting head H. Which one of the two mentioned possibilities is chosen, is dependent on a user input signal, which has been detected on a human machine interface or user interface UI. The human machine interface UI is configured to provide a multimodal button MMB on which a selection signal may be detected.

**Figure 5a** shows such a human machine interface UI which comprises four different optimization criteria, which are competing: energy, safety, time, excitation and/or vibration of machine components, in particular of the laser cutting head H. This means, that all these four (4) optimization criteria are interdependent. Therefore, in a preferred embodiment, the multimodal button MMB is provided so that the user is automatically guided in his selection with respect to the competing optimization criteria.

**Figure 5b** shows an example of the human machine interface UI with the multimodal button MMB being selected, such as time should serve as predominant optimization criteria.

**Figure 5c** shows another example of the human machine interface UI with the multimodal button MMB being selected, such as safety and energy consumption together should serve as combined optimization criteria.

**Figure 5d** shows still another example of the human machine interface UI with the multimodal button MMB being selected, such as energy and machine excitation and/or vibration should be minimized.

Based on the user input on the multimodal button MMB, a selection signal is detected and used by the instructor INS to issue instructions, in particular detouring instructions.

By applying the multimodal button MMB, the optimization criteria may be configured in response to the selection signal. With this, it is possible to even amend the optimization criteria on the fly, which means during a running cutting process. This has the advantage, that the user may amend his or her optimization criteria in case it is detected, that other settings should better be applied in order to improve quality or performance or wear of the laser machine. This feature makes the laser cutting process and its optimization more flexible. Further, for an unmanned production during night-shift a safer positioning is desirable, which may be set by means of the multimodal button MMB.

**Figure 6** shows different tilting scenarios in a schematic representation. Before cutting has started or has been finished the part P is positioned on the surface of the working table WT (horizontal extension). Dependent on the geometrical data and/or position data and/or laser cutting process related data, i.e., cutting properties like gas pressure and/or kerf width, the tilt estimator TE calculates a tilting risk. This is done by executing the probability function for each part P.

Generally, and also depicted in the example, shown in figure 6, different tilt volumes (voxels) might be covered. The probability function simulates part movement or part behavior with respect to tilting and calculates tilting states and assigns each of the calculated tilting state a probability. For example:

A first final position, represented in figure 6 with dashed lines will be taken in 20% of the cases. A third final position, represented in figure 6 with dotted marketing will be taken in 10% of the cases and a fourth final position, represented in figure 6 with crosshatching will be taken in 40% of the cases.

The probability function preferably makes use of a Monte Carlo simulation.

The part behavior may be simulated using Monte-Carlo simulation. The simulated parameter can be the position of the part P relative to the cutting table WT which leads to different final position of the part after tiling.

The space is partitioned into equally sized or variable-sized collision volumes (3D voxel grid). Occupancy of each collision volume is calculated as the sum of probabilities that this volume is occupied in any of the tilting outcomes.

Any trajectory crossing a set of collision volumes has the integral collision probability which is calculated as follows in case of full independence of each volume's occupancy:

$$p_{collision} = 1 - \prod_{\substack{All\ crossed \\ volumes}} \left(1 - p_{\substack{volume \\ occupancy}}\right)$$

In the real case the independence of occupancy of each volume is not known (a part normally occupies a set of neighboring volumes in a particular direction making them fully dependent). Thus, for simplicity we could count the probability of a collision as follows:

$$p_{collision} = \max_{\substack{All\ crossed \\ volumes}} p_{\substack{volume \\ occupancy}}$$

Example of such simulation result (in 2D side projection) is depicted in Fig. 6. Theoretical tilt simulation has resulted in 4 possible final positions with 40%, 10%, 30% and 20% respective probabilities.

In the given example the volume 1 will be occupied in 30% of cases, volume 3 in 10% of cases, 2 and 4 have 0% occupancy probability and 5 has 50% occupancy probability.

The calculated result of the tilt estimator may be forwarded and processed by a controller C for controlling laser cutting head movement.

**Figure 7a** schematically represents the cutting scenario with a plurality of parts P within a workpiece WP to be cut according to a cutting plan cp. It is differentiated between stable parts and tilting parts, such as the stable parts have no or a very low tilting risk and the tilting parts have a high tilting risk. The latter may for example be very thin or may be positioned in a manner on the grate G that allows tilting after completion of the cutting process. In Figure 7a such a tilting part is represented in the middle of the workpiece WP as a thin rectangular part, represented in dark grey, whereas the stable parts or more stable parts are bigger in size and are represented in light grey. The cutting sequence is usually represented in the cutting plan cp, which is received by the controller C, controlling the laser cutting process and the laser cutting head movement. The cutting sequence is represented in figure 7a by the dotted arrows. As can be seen, after having cut the first three stable parts P1, P2, P3, the tilting part P4 with a potential tilting risk is to be cut next. After having completely cut out the fourth part P4 with the tilting risk, the laser cutting head H proceeds to the fifth part P5 and then to the sixth part P6 which is shown in figure 7a in the lower line. After having completely cut the sixth part P6, the laser cutting head H proceeds to the seventh part P7. However, the optimized transfer trajectory between part P6 and part P7 would cross part P4, which has a tilting risk. Thus, without applying any collision avoidance measures, a collision risk exists and the collision might occur, which is represented in figure 7a by the crash symbol. In the scenario shown in figure 7a, the cutting sequence is: P1 - P2 - P3 - P4 - P5 - P6 - P7 - P8 - P9.

According to the invention in the scenario, described above with respect to figure 7a, the tilt estimator TE may calculate a probability-assigned tilt volume, indicating the risk for colliding with part P4, when proceeding from part P6 to part P7. According to a preferred embodiment, the result of the tilt estimator calculation is used for accessing the instructor INS for determining instructions for controlling the laser cutting process. In particular the calculated probability-assigned tilt volume *prob-vol* is used for accessing the instructor INS.

In the example, represented in **Figure 7b,** sequencing instructions are issued by the instructor INS. Sequencing instructions represent that a modified sequence for cutting the parts is generated, compared to the sequence, which is usually applied (shown in figure 7a), namely: P1 - P2 - P3 - P5 - P6 - P4 - P7 - P8 - P9.

Another option according to the invention is to issue nesting instructions for generating a modified nesting of the parts P. This is represented in **Figure 7c.** The problematic part P4 with the tilting risk (dark grey) is positioned elsewhere on the workpiece WP such as it may be cut first and although it may tilt after being cut out, the laser cutting head H is not required to cross the problematic part again. The cutting sequence is represented in figure 7C by the arrows.

**Fig. 8a** shows a schematic representation of a wear state of the support element of the support structure. A metal sheet is placed on the grate G of the working table WT. The grate G itself extends in X- or Y- direction and thus in a plane parallel to the working table surface.

The grate G has a nearly rectangular shape from the side view but is equipped with prongs on the upper side as e.g., shown in Fig. 8a. The prongs 10, extending in Z-direction and serve to support the workpiece WP with the parts P. Usually, prongs 10 of different grates G may be used for supporting the workpiece WP.

A part P which is cut out and is tilted due to wear of the grate G is shown in the middle. Thus, wear of the support element (e.g., grate G) of the support structure (e.g., working table) impairs cutting quality as the tilting risk is increased. The wear state is detected automatically by means of a detector D.

**Fig. 8b** is a picture of a wear state of the grate G. Molten material may attach to the grate and may have the disadvantageous effect that parts may not be cut completely and may not be taken from the working table.

**Fig. 9** shows several embodiments of the controller C for controlling the movement of the laser cutting head H for collision avoidance during cutting. The controller C comprises a cutting plan interface cpi for receiving the cutting plan cp. The controller comprises the tilt estimator TE. The controller further comprises an output interface oi for providing the result of the tilt estimation process with an estimated tilt state for each or selected parts P before cutting. The tilt estimator TE is configured for estimating tilt states for parts P to be cut from a workpiece WP by means of a laser cutting head H and comprises an implemented and executable probability function which is executed for each of the parts P for calculating a probability-assigned tilt volume *prob-vol.* The probability function calculates all possible tilting states of the parts P to be cut based on at least the geometrical data and/or the received cutting plan cp. Typically the geometrical data is included in the cutting plan. The probability function assigns to each calculated tilting state a probability risk, indicating the probability that the part will be transferred in the calculated tilting state. The tilting state preferably comprises an indication of the tilting angle.

Thus, the result of the execution of the tilt estimator TE is the calculated probability-assigned tilt volume. The probability-assigned tilt volume is referenced in figure 9 with reference numeral *prob-vol.* The probability-assigned tilt volume *prob-vol* may be forwarded to the instructor INS. In a preferred embodiment, the controller C may comprise the instructor INS, which is depicted in Fig. 9 with the dotted lines. Alternatively, the instructor INS may be provided as separate module, being in data exchange with the tilt estimator TE. The instructor INS is configured to generate instructions. The instructions may comprise A - sequencing instructions and/or B-detouring instructions and/or C - nesting instructions. If sequencing instructions are generated and are to be applied, another sequence for the parts P need to be cut is defined. Typically, the sequence instructions will issue a modified cutting plan cp*. The modified cutting plan cp* may be fed back to the tilt estimator TE for calculating the probability-assigned tilt volume *prob-vol* for the newly generated cutting part sequence. The modified cutting plan cp* differs from the cutting plan cp as having different sequencing instructions and/or different nesting instructions.

As represented in figure 9, the tilt estimator TE and/or the instructor INS may be executed in an off-line mode. "Off-line" in this respect means, that the necessary calculations may be executed prior to cutting. Alternatively, the tilt estimator TE and/or the instructor INS may be executed in an online mode, i.e., during the cutting process. In this case, the detector D may be used for detecting the actual tilt situation with all tilt state of all parts. This may be executed by a set of cameras. The detected detector signals may be fed back as feedback signal fb to the tilt estimator TE in order to calibrate the probability function. This provides learning functionality to the tilt estimator TE. In addition, or alternatively, the feedback signal fb may also be used for comparing the estimated tilt states with the actually detected tilt states of all parts P which already has been cut. Based on this comparison (actual /detected value versus estimated/-calculated value) a calibration for the probability function may be executed. Further, the comparison result may be used to adapt set thresholds and/or setting points, for example safety margins or safety zones in order to minimize the difference between actual and estimated tilt state.

In a preferred embodiment, the detouring instructions, when calculated by the instructor INS are calculated by accessing an optimizer module O. The optimizer module O is controlled by a set of optimization criteria, wherein all the optimization criteria of the set of optimization criteria are set or adjusted in common by means of providing a selection signal on a multi-modal button MMB on a user interface UI.

Preferably, the tilt estimator TE may be used for or in an automation system, like a sorting system SORT. The sorting system SORT may be adapted to automatically sort the cut part P from the working table or support structure. Thus, the sorting system is a subsequent process after laser cutting. The result, provided by the tilt estimator TE, namely the tilting risk with the probability-assigned tilt volume may be used for controlling the sorting system SORT, in particular in defining the sorting heads for sorting the parts P. This is an advantage, because the tilted parts and the non-tilted parts typically require different sorting processes and different sorting heads (suction cups, grippers, robots etc.).

**Figure 10** is a flowchart of the method for estimating a tilt state. After start of the method, in step S1 the cutting plan and/or geometrical data is received. In step S2 the tilt estimator TE is accessed. In step S3 the probability function is executed for each or four selected parts P, so that all tilting states of the parts P are calculated and are assigned or associated to a probability. The probability represents the risk, that the part will tilt in the particular state, namely tilt with the particular angle. In step S4 the calculated probability-assigned tilt volume is provided as result. In a first embodiment of the method may and after step S4. In a second embodiment, the method may proceed with step S5 by accessing the instructor INS for determining instructions for controlling the laser cutting process. In step S6 the instructions are issued and used for controlling the laser cutting process. After this, the method may end. As steps S4, S5 are optional, these are represented in Fig. 10 with dotted lines.

**Fig. 11** is a picture, representing the laser cutting head H during cutting parts P out of the workpiece WP, being positioned on the grate G and in particular on the prongs 10 of at least one grate G of a working table WT. The different heights of the prongs 10 represent a wear state of the grate G which may be detected automatically by means of detector D (e.g., at least one camera) and will be processed by the tilt estimator TE.

## Claims

1. Computer-implemented method for estimating tilt states of parts (P) which are to be cut-out of a workpiece (WP) by means of a laser cutting head (H) of a laser machine (L) and which are placed on a support element (G) of a support structure (WT), wherein the method is used for collision avoidance for the laser cutting head when controlling the same in connection with a laser cutting process, wherein the method comprises:

    - Receiving (S1) a cutting plan (cp) with position data, inter alia representing a relative position and/or orientation of the workpiece with the parts to be cut and a support element (G) of the support structure (WT);
    - Accessing (S2) a tilt estimator (TE) with an implemented and executable probability function;
    - Executing (S3) the probability function for each of the parts (P) to be cut, for calculating a probability-assigned tilt volume (*prob-vol*), wherein the probability function calculates all possible tilting states of the parts (P) to be cut, based on at least the received position data and wherein the probability function further assigns to each calculated tilting state a probability, indicating the tilting risk that the part (P) will be transferred in said calculated tilting state after complete cutting-out the part (P) of the workpiece (WP), wherein the space is partitioned into equally sized or variable sized collision volumes and occupancy of each collision volume is calculated as the sum of probabilities that this volume is occupied in any of the tilting outcomes, wherein the probability function is executed prior to cutting in an offline mode, wherein the probability-assigned tilt volume is calculated by taking into account a cutting property, and wherein the cutting property is a kerf width;
    - Providing (S4) the calculated probability-assigned tilt volume (*prob-vol*);
    - Accessing (S5) an instructor (INS) for determining instructions for controlling the laser cutting process, wherein accessing is executed in response to the calculated probability-assigned tilt volume,
    - wherein the instructions comprise issuance (S6) of:

        - detouring instructions for controlling a set of drives for laser cutting head movement according to a three-dimensional trajectory for collision-avoidance free cutting head movement, wherein the detouring instructions are calculated such that the calculated, probability-based tilt volume (*prob-vol*) is taken into account for generating a new trajectory which prevents the laser cutting head from colliding with presumably tilted parts.

2. Method according to claim 1, wherein the instructions further comprise issuance (S6) of:

    - sequencing instructions for generating a modified sequence for the parts to be cut, while not changing a nesting and while not crossing an area, which has been determined to have a tilting risk, such that the laser cutting head is prevented from traversing or crossing areas which have been determined to have a tilting risk; and/or
    - nesting instructions for generating a modified nesting for future cutting tasks by amending the cutting plan (cp) to provide an amended nesting for the parts which still need to be cut by taking into account the result of the tilt estimator (TE), namely the probability-assigned tilt volume (*prob-vol*).

3. Method according to any of the preceding claims, wherein the method comprises detecting a tilt state of a part (P) by means of a detector (D) and providing a feedback signal (fb), indicative of the actual tilt state and/or wherein the feedback signal (fb) is used for updating the calculated probability-assigned tilt volume.

4. Method according to claim 3, wherein the feedback signal (fb) is used for updating the probability function.

5. Method according to claims 3 or 4, wherein the feedback signal (fb) is used for online adaption of the instructions, in particular of the detouring instructions, the sequence instructions and/or the nesting instructions, so that the cutting head (H) is instructed with adapted instructions for a remaining rest of the cutting process of the workpiece (WP) on the basis of the detected tilt state.

**6.** Method according to any of the preceding claims, wherein the tilt state and/or other collision risks is/are detected by using an optical sensor system, in particular a camera system and/or a lidar system and/or sonar sensor system.

**7.** Method according to claim 4 in combination with anyone of the preceding claims, wherein updating the probability function is executed online during the course of cutting or thereinafter.

**8.** Method according to any of the preceding claims, wherein the detouring instructions are implementing the three-dimensional trajectory for collision-avoidance free cutting head movement, which is calculated by an optimizer module (O), wherein the optimizer module (O) is controlled by a set of optimization criteria, wherein all the optimization criteria of the set of optimization criteria are set or adjusted in common by means of providing a selection signal on a multi-modal button (MMB) on a user interface (UI).

**9.** Method according to the directly preceding claim, wherein the detouring instructions comprise Z-axis changes of the cutting head (H) or are without such Z-axis changes according to received optimization criteria.

**10.** Method according to any of the preceding claims, wherein the probability-assigned tilt volume is calculated by taking into account further cutting properties, optionally comprising a gas pressure.

**11.** Method according to any of the preceding claims, wherein machine dynamics of the laser cutting head (H) and/or wear of support elements (G) of the support structure (WT) are considered for calculation of the probability-assigned tilt volume.

**12.** Controller (C) for estimating tilt states of parts (P) which are to be cut-out of a workpiece (WP) by means of a laser cutting head (H) of a laser machine (L) and which are placed on a support element (G) of a support structure (WT), wherein the controller (C) is configured for controlling movement of a laser cutting head (H) when executing a laser cutting process, wherein the controller is further configured for collision avoidance, and wherein the controller (C) is configured to execute the method according to any of the preceding method claims, and comprises:

- A cutting plan interface (cpi), which is configured for receiving a cutting plan (cp), which is intended for cutting out parts (P) of a workpiece (WP), wherein the cutting plan (cp) comprises position data, inter alia representing a relative position and/or orientation of the workpiece with the parts to be cut and a support element (G) of the support structure (WT);
- A tilt estimator (TE), wherein the tilt estimator (TE) comprises an implemented and executable probability function which is executed for each of the parts (P) to be cut, for calculating a probability-assigned tilt volume, wherein the probability function calculates all possible tilting states of the parts to be cut, based on at least the received position data and wherein the probability function further assigns to each calculated tilting state a probability, indicating the tilting risk that the part will be transferred in said calculated tilting state after complete cutting the part out of the workpiece (WP), wherein the space is partitioned into equally sized or variable sized collision volumes and occupancy of each collision volume is calculated as the sum of probabilities that this volume is occupied in any of the tilting outcomes wherein the probability function is executed prior to cutting in an offline mode, wherein the probability-assigned tilt volume is calculated by taking into account a cutting property and wherein the cutting property is a kerf width ;
- An output interface (oi) for providing the calculated probability-assigned tilt volume (*prop-vol*); and
- An instructor (INS), configured to determine instructions for controlling the laser cutting process based on the calculated probability-assigned tilt volume (*prop-vol*),
- wherein the instructions comprise:

  - detouring instructions for controlling a set of drives for laser cutting head movement according to a three-dimensional trajectory for collision-avoidance free cutting head movement.

**13.** Controller (C) according to the preceding claim, wherein the instructions further comprise:

- sequencing instructions for generating a modified trajectory by means of changing the sequence of the parts to be cut, while not changing a nesting and while not crossing an area, which has been determined to have a tilting risk, such that the laser cutting head is prevented from traversing or crossing areas which have been determined to have a tilting risk; and/or
- nesting instructions for generating a modified nesting by amending the cutting plan (cp) to provide an amended nesting for the parts which still need to be cut by taking into account the result of the tilt estimator (TE), namely the probability-assigned tilt volume (prob-vol).

**14.** A computer program comprising a computer program code, the computer program code when executed by a processor causing the processor to perform the steps of the method of any of the method claims 1 to 11.

## Patentansprüche

**1.** Computerimplementiertes Verfahren zur Abschätzung von Neigungszuständen von mittels eines Laserschneidkopfes (H) einer Lasermaschine (L) aus einem Werkstück (WP) auszuschneidenden Teilen (P), die auf einem Trägerelement (G) einer Trägerstruktur (WT) aufgesetzt sind, wobei das Verfahren zur Kollisionsvermeidung für den Laserschneidkopf bei dessen Steuerung im Zusammenhang mit einem Laserschneidprozess verwendet wird, wobei das Verfahren Folgendes umfasst:

- Empfangen (S1) eines Schneidplans (cp) mit Positionsdaten, die unter anderem eine relative Position und/oder Ausrichtung des Werkstücks mit den zu schneidenden Teilen und einem Trägerelement (G) der Trägerstruktur (WT) darstellen;
- Zugreifen (S2) auf einen Neigungsschätzer (TE) mit einer implementierten und ausführbaren Wahrscheinlichkeitsfunktion;
- Ausführen (S3) der Wahrscheinlichkeitsfunktion für jedes der zu schneidenden Teile (P), um ein Neigungsvolumen mit zugeordneter Wahrscheinlichkeit (*prob-vol*) zu berechnen, wobei die Wahrscheinlichkeitsfunktion alle möglichen Neigungszustände der zu schneidenden Teile (P) auf der Grundlage zumindest der empfangenen Positionsdaten berechnet und wobei die Wahrscheinlichkeitsfunktion ferner jedem berechneten Neigungszustand eine Wahrscheinlichkeit zuordnet, die das Neigungsrisiko angibt, dass das Teil (P) nach dem vollständigen Ausschneiden des Teils (P) aus dem Werkstück (WP) in den berechneten Neigungszustand überführt wird, wobei der Raum in gleich große oder variabel große Kollisionsvolumina aufgeteilt ist und die Belegung jedes Kollisionsvolumens als die Summe aller Wahrscheinlichkeiten berechnet wird, dass dieses Volumen in irgendeinem der Neigungsergebnisse belegt ist, wobei die Wahrscheinlichkeitsfunktion vor dem Schneiden in einem Offline-Modus ausgeführt wird, wobei das Neigungsvolumen mit zugeordneter Wahrscheinlichkeit unter Berücksichtigung einer Schneideigenschaft berechnet wird und wobei die Schneideigenschaft eine Schnittbreite ist;
- Bereitstellen (S4) des berechneten Neigungsvolumens mit zugeordneter Wahrscheinlichkeit (*prob-val*);
- Zugreifen (S5) auf einen Instruktor (INS) zum Bestimmen von Anweisungen zum Steuern des Laserschneidprozesses, wobei das Zugreifen als Reaktion auf das berechnete Neigungsvolumen mit zugeordneter Wahrscheinlichkeit ausgeführt wird,
- wobei die Anweisungen das Ausgeben (S6) von Folgendem umfassen:

  - Umsteuerungsanweisungen zur Steuerung eines Satzes von Antrieben zur Laserschneidkopf-Bewegung gemäß einer dreidimensionalen Trajektorie zur kollisionsvermeidenden freien Schneidkopf-Bewegung, wobei die Umsteuerungsanweisungen so berechnet werden, dass das berechnete Neigungsvolumen mit zugeordneter Wahrscheinlichkeit (*prob-vol*) zur Erzeugung einer neuen Trajektorie berücksichtigt wird, die eine Kollision des Laserschneidkopfes mit vermutlich geneigten Teilen verhindert.

**2.** Verfahren nach Anspruch 1, wobei die Anweisungen ferner das Ausgeben (S6) von Folgendem umfassen:

- Sequenzierungsanweisungen zum Erzeugen einer geänderten Sequenz für die zu schneidenden Teile, wobei eine Verschachtelung nicht geändert wird und ein Bereich mit ermitteltem Neigungsrisiko nicht durchquert wird, was den Laserschneidkopf daran hindert, Bereiche mit ermitteltem Neigungsrisiko zu durchqueren oder zu überqueren; und/oder
- Verschachtelungsanweisungen zum Erzeugen einer geänderten Verschachtelung für zukünftige Schneidaufgaben durch Ändern des Schneidplans (cp), um eine geänderte Verschachtelung für die noch zu schneidenden Teile bereitzustellen, indem das Ergebnis des Neigungsschätzers (TE), nämlich das Neigungsvolumen mit zugeordneter Wahrscheinlichkeit (*prob-vol*), berücksichtigt wird.

**3.** Verfahren nach einem der vorhergehenden Ansprüche, wobei das Verfahren das Erfassen eines Neigungszustands eines Teils (P) mittels eines Detektors (D) und das Bereitstellen eines Rückmeldesignals (fb) umfasst, das den aktuellen Neigungszustand angibt, und/oder wobei das Rückmeldesignal (fb) zum Aktualisieren des berechneten Neigungsvolumens mit zugeordneter Wahrscheinlichkeit verwendet wird.

**4.** Verfahren nach Anspruch 3, wobei das Rückmeldesignal (fb) zum Aktualisieren der Wahrscheinlichkeitsfunktion verwendet wird.

**5.** Verfahren nach Anspruch 3 oder 4, wobei das Rückmeldesignal (fb) zur Online-Anpassung der Anweisungen, insbesondere der Umsteuerungsanweisungen, der Sequenzierungsanweisungen und/oder der Verschachtelungsanweisungen, verwendet wird, so dass der Schneidkopf (H) auf der Grundlage des erfassten Neigungszustandes angepasste Anweisungen für einen verbleibenden Rest des Schneidprozesses des Werkstücks (WP) erhält.

**6.** Verfahren nach einem der vorhergehenden Ansprüche, wobei der Neigungszustand und/oder andere Kollisionsrisiken mit Hilfe eines optischen Sensorsystems erfasst werden, insbesondere mit einem Kamerasystem und/oder einem Lidar- und/oder Sonarsensor-System.

**7.** Verfahren nach Anspruch 4 kombiniert mit einem der vorhergehenden Ansprüche, wobei das Aktualisieren der Wahrscheinlichkeitsfunktion online während des Schneidens oder danach durchgeführt wird.

**8.** Verfahren nach einem der vorhergehenden Ansprüche, wobei die Umsteuerungsanweisungen die von einem Optimierungsmodul (O) berechnete dreidimensionale Trajektorie zur kollisionsvermeidenden freien Schneidkopf-Bewegung umsetzen, wobei das Optimierungsmodul (O) durch einen Satz von Optimierungskriterien gesteuert wird, wobei alle Optimierungskriterien des Satzes von Optimierungskriterien gemeinsam durch Bereitstellung eines Auswahlsignals über eine multimodale Schaltfläche (MMB) in einer Benutzeroberfläche (UI) eingestellt oder angepasst werden.

**9.** Verfahren nach dem unmittelbar vorhergehenden Anspruch, wobei die Umsteuerungsanweisungen Z-Achsen-Veränderungen des Schneidkopfes (H) umfassen oder solche Z-Achsen-Veränderungen gemäß erhaltenen Optimierungskriterien nicht umfassen.

**10.** Verfahren nach einem der vorhergehenden Ansprüche, wobei das Neigungsvolumen mit zugeordneter Wahrscheinlichkeit unter Berücksichtigung weiterer Schneideigenschaften, die gegebenenfalls einen Gasdruck umfassen, berechnet wird.

**11.** Verfahren nach einem der vorhergehenden Ansprüche, wobei zur Berechnung des Neigungsvolumens mit zugeordneter Wahrscheinlichkeit die Maschinendynamik des Laserschneidkopfes (H) und/oder der Verschleiß von Trägerelementen (G) der Trägerstruktur (WT) berücksichtigt werden.

**12.** Steuerung (C) zur Abschätzung von Neigungszuständen von mittels eines Laserschneidkopfes (H) einer Lasermaschine (L) aus einem Werkstück (WP) auszuschneidenden Teilen (P), die auf einem Trägerelement (G) einer Trägerstruktur (WT) aufgesetzt sind, wobei die Steuerung (C) zur Steuerung der Bewegung eines Laserschneidkopfes (H) bei der Ausführung eines Laserschneidprozesses konfiguriert ist, wobei die Steuerung ferner zur Kollisionsvermeidung konfiguriert ist und wobei die Steuerung (C) zur Ausführung des Verfahrens nach einem der vorhergehenden Verfahrensansprüche konfiguriert ist und Folgendes umfasst:

- eine Schneidplan-Schnittstelle (cpi), die dazu konfiguriert ist, einen Schneidplan (cp) zu empfangen, der zum Ausschneiden von Teilen (P) eines Werkstücks (WP) bestimmt ist, wobei der Schneidplan (cp) Positionsdaten umfasst, die unter anderem eine relative Position und/oder Ausrichtung des Werkstücks mit den zu schneidenden Teilen und einem Trägerelement (G) der Trägerstruktur (WT) darstellen;
- einen Neigungsschätzer (TE), wobei der Neigungsschätzer (TE) eine implementierte und ausführbare Wahrscheinlichkeitsfunktion umfasst, die für jedes der zu schneidenden Teile (P) ausgeführt wird, um ein Neigungsvolumen mit zugeordneter Wahrscheinlichkeit zu berechnen, wobei die Wahrscheinlichkeitsfunktion alle möglichen Neigungszustände der zu schneidenden Teile auf der Grundlage zumindest der empfangenen Positionsdaten berechnet und wobei die Wahrscheinlichkeitsfunktion ferner jedem berechneten Neigungszustand eine Wahrscheinlichkeit zuordnet, die das Neigungsrisiko angibt, dass das Teil nach dem vollständigen Schneiden des Teils aus dem Werkstück (WP) in den berechneten Neigungszustand überführt wird, wobei der Raum in gleich große oder variabel große Kollisionsvolumina aufgeteilt ist und die Belegung jedes Kollisionsvolumens als die Summe aller Wahrscheinlichkeiten berechnet wird, dass dieses Volumen in irgendeinem der Neigungsergebnisse belegt ist, wobei die Wahrscheinlichkeitsfunktion vor dem Schneiden in einem Offline-Modus ausgeführt wird, wobei das Neigungsvolumen mit zugeordneter Wahrscheinlichkeit unter Berücksichtigung einer Schneideigenschaft berechnet wird und wobei die Schneideigenschaft eine Schnittbreite ist;
- eine Ausgabeschnittstelle (oi) zur Bereitstellung des berechneten Neigungsvolumens mit zugeordneter Wahrscheinlichkeit (*prop-vol*); und

- einen Instruktor (INS), der dazu konfiguriert ist, Anweisungen zum Steuern des Laserschneidprozesses auf der Grundlage des berechneten Neigungsvolumens mit zugeordneter Wahrscheinlichkeit (*prop-vol*) zu bestimmen,
- wobei die Anweisungen Folgendes umfassen:

  - Umsteuerungsanweisungen zur Steuerung eines Satzes von Antrieben zur Laserschneidkopf-Bewegung gemäß einer dreidimensionalen Trajektorie zur kollisionsvermeidenden freien Schneidkopf-Bewegung.

**13.** Steuerung (C) nach dem vorhergehenden Anspruch, wobei die Anweisungen ferner Folgendes umfassen:

- Sequenzierungsanweisungen zum Erzeugen einer geänderten Trajektorie durch Änderung der Sequenz der zu schneidenden Teile, wobei eine Verschachtelung nicht geändert wird und ein Bereich mit ermitteltem Neigungsrisiko nicht durchquert wird, was den Laserschneidkopf daran hindert, Bereiche mit ermitteltem Neigungsrisiko zu durchqueren oder zu überqueren; und/oder
- Verschachtelungsanweisungen zum Erzeugen einer geänderten Verschachtelung durch Ändern des Schneidplans (cp), um eine geänderte Verschachtelung für die noch zu schneidenden Teile bereitzustellen, indem das Ergebnis des Neigungsschätzers (TE), nämlich das Neigungsvolumen mit zugeordneter Wahrscheinlichkeit (prob-vol), berücksichtigt wird.

**14.** Computerprogramm, das einen Computerprogrammcode umfasst, wobei der Computerprogrammcode bei Ausführung durch einen Prozessor den Prozessor veranlasst, die Schritte des Verfahrens nach einem der Verfahrensansprüche 1 bis 11 durchzuführen.

## Revendications

**1.** Procédé mis en œuvre par ordinateur pour estimer les états d'inclinaison de parties (P) qui doivent être découpées dans une pièce (WP) au moyen d'une tête de découpe laser (H) d'une machine laser (L) et qui sont placées sur un élément de support (G) d'une structure de support (WT), dans lequel le procédé est utilisé pour éviter les collisions de la tête de découpe laser lors de sa commande en relation avec un processus de découpe laser, dans lequel le procédé comprend :

- la réception (S1) d'un plan de coupe (cp) avec des données de position, représentant entre autres une position et/ou une orientation relative de la pièce avec les parties à couper et un élément de support (G) de la structure de support (WT) ;
- l'accès (S2) à un estimateur d'inclinaison (TE) avec une fonction de probabilité mise en œuvre et exécutable ;
- l'exécution (S3) de la fonction de probabilité pour chacune des parties (P) à couper, pour calculer un volume d'inclinaison attribué par probabilité (*prob-vol*), dans lequel la fonction de probabilité calcule tous les états d'inclinaison possibles des parties (P) à découper, sur la base au moins des données de position reçues et dans lequel la fonction de probabilité attribue en outre à chaque état d'inclinaison calculé une probabilité, indiquant le risque d'inclinaison que la partie (P) soit transférée dans ledit état d'inclinaison calculé après la découpe complète de la partie (P) de la pièce (WP), dans lequel l'espace est divisé en volumes de collision de taille égale ou de taille variable et l'occupation de chaque volume de collision est calculée comme la somme des probabilités que ce volume soit occupé dans l'un quelconque des résultats d'inclinaison, dans lequel la fonction de probabilité est exécutée avant la découpe en mode hors ligne, dans lequel le volume d'inclinaison attribué à la probabilité est calculé en tenant compte d'une propriété de découpe, et dans lequel la propriété de découpe est une largeur de trait de scie ;
- la fourniture (S4) du volume d'inclinaison attribué par probabilité calculé (*prob-vol*) *;*
- l'accès (S5) à un instructeur (INS) pour déterminer des instructions pour contrôler le processus de découpe laser, dans lequel l'accès est exécuté en réponse au volume d'inclinaison attribué par probabilité calculé,
- dans lequel les instructions comprennent l'émission (S6) des éléments suivants :

  - des instructions d'évitement pour commander un ensemble d'entraînements pour le mouvement de la tête de découpe laser selon une trajectoire tridimensionnelle pour un mouvement de la tête de découpe libre sans collision, dans lequel les instructions d'évitement sont calculées de telle sorte que le volume d'inclinaison calculé basé sur la probabilité (*prob-vol*) est pris en compte pour générer une nouvelle trajectoire qui évite que la tête de découpe laser n'entre en collision avec des pièces vraisemblablement inclinées.

**2.** Procédé selon la revendication 1, dans lequel les instructions comprennent en outre l'émission (S6) des éléments suivants :

- des instructions de séquençage pour générer une séquence modifiée pour les parties à découper, sans modifier une imbrication et sans traverser une zone qui a été déterminée comme présentant un risque d'inclinaison, de telle sorte que la tête de découpe laser soit empêchée de traverser ou de croiser des zones qui ont été déterminées comme présentant un risque d'inclinaison ; et/ou
- des instructions d'imbrication pour générer une imbrication modifiée pour des tâches de découpe futures, en modifiant le plan de découpe (cp) pour fournir une imbrication modifiée pour les pièces qui doivent encore être découpées en tenant compte du résultat de l'estimateur d'inclinaison (TE), à savoir le volume d'inclinaison attribué par probabilité (*prob-vol*).

**3.** Procédé selon l'une quelconque des revendications précédentes, dans lequel le procédé comprend la détection d'un état d'inclinaison d'une partie (P) au moyen d'un détecteur (D) et la fourniture d'un signal de rétroaction (fb), indicatif de l'état d'inclinaison réel et/ou dans lequel le signal de rétroaction (fb) est utilisé pour mettre à jour le volume d'inclinaison calculé, attribué par probabilité.

**4.** Procédé selon la revendication 3, dans lequel le signal de rétroaction (fb) est utilisé pour mettre à jour la fonction de probabilité.

**5.** Procédé selon les revendications 3 ou 4, dans lequel le signal de rétroaction (fb) est utilisé pour l'adaptation en ligne des instructions, en particulier des instructions d'évitement, des instructions de séquence et/ou des instructions d'imbrication, de sorte que la tête de découpe (H) reçoit des instructions adaptées pour un reste du processus de découpe de la pièce (WP) sur la base de l'état d'inclinaison détecté.

**6.** Procédé selon l'une quelconque des revendications précédentes, dans lequel l'état d'inclinaison et/ou d'autres risques de collision sont détectés à l'aide d'un système de capteur optique, en particulier un système de caméra et/ou un système lidar et/ou un système de capteur sonar.

**7.** Procédé selon la revendication 4 en combinaison avec l'une quelconque des revendications précédentes, dans lequel la mise à jour de la fonction de probabilité est exécutée en ligne au cours de la découpe ou après celle-ci.

**8.** Procédé selon l'une quelconque des revendications précédentes, dans lequel les instructions d'évitement mettent en œuvre la trajectoire tridimensionnelle pour un mouvement de tête de découpe libre sans collision, lequel est calculé par un module optimiseur (O), dans lequel le module optimiseur (O) est contrôlé par un ensemble de critères d'optimisation, dans lequel tous les critères d'optimisation de l'ensemble de critères d'optimisation sont définis ou ajustés en commun au moyen de la fourniture d'un signal de sélection sur un bouton multimodal (MMB) sur une interface utilisateur (UI).

**9.** Procédé selon la revendication directement précédente, dans lequel les instructions d'évitement comprennent des changements d'axe Z de la tête de découpe (H) ou sont dépourvues de tels changements d'axe Z selon des critères d'optimisation reçus.

**10.** Procédé selon l'une quelconque des revendications précédentes, dans lequel le volume d'inclinaison attribué par probabilité est calculé en tenant compte d'autres propriétés de découpe, comprenant éventuellement une pression de gaz.

**11.** Procédé selon l'une quelconque des revendications précédentes, dans lequel la dynamique de la machine de la tête de découpe laser (H) et/ou l'usure des éléments de support (G) de la structure de support (WT) sont prises en compte pour le calcul du volume d'inclinaison attribué par probabilité.

**12.** Contrôleur (C) pour estimer les états d'inclinaison de parties (P) qui doivent être découpées dans une pièce (WP) au moyen d'une tête de découpe laser (H) d'une machine laser (L) et qui sont placées sur un élément de support (G) d'une structure de support (WT), dans lequel le contrôleur (C) est configuré pour commander le mouvement d'une tête de découpe laser (H) lors de l'exécution d'un processus de découpe laser, dans lequel le contrôleur est en outre configuré pour éviter les collisions, et dans lequel le contrôleur (C) est configuré pour exécuter le procédé selon l'une quelconque des revendications de procédé précédentes, et comprend :

- une interface de plan de découpe (cpi), qui est configurée pour recevoir un plan de découpe (cp), qui est destiné à la découpe de parties (P) d'une pièce (WP), dans lequel le plan de découpe (cp) comprend des données de position, représentant entre autres une position et/ou une orientation relative de la pièce avec les parties à découper et un élément de support (G) de la structure de support (WT) ;
- un estimateur d'inclinaison (TE) dans lequel l'estimateur d'inclinaison (TE) comprend une fonction de probabilité mise en œuvre et exécutable qui est exécutée pour chacune des parties (P) à découper, pour calculer un volume d'inclinaison attribué par probabilité, dans lequel la fonction de probabilité calcule tous les états d'inclinaison possibles des parties à découper, sur la base au moins des données de position reçues et dans lequel la fonction de probabilité attribue en outre à chaque état d'inclinaison calculé une probabilité, indiquant le risque d'inclinaison selon lequel la pièce est transférée dans ledit état d'inclinaison calculé après la découpe complète de la partie de la pièce (WP), dans lequel l'espace est divisé en volumes de collision de taille égale ou de taille variable et l'occupation de chaque volume de collision est calculée comme la somme des probabilités que ce volume soit occupé dans l'un quelconque des résultats d'inclinaison, dans lequel la fonction de probabilité est exécutée avant la découpe en mode hors ligne, dans lequel le volume d'inclinaison attribué par probabilité est calculé en tenant compte d'une propriété de découpe, et dans lequel la propriété de découpe est une largeur de trait de scie ;

- une interface de sortie (oi) pour fournir le volume d'inclinaison attribué par probabilité calculé (*vol-prop*) *;* et
- un instructeur (INS), configuré pour déterminer des instructions permettant de contrôler le processus de découpe laser en fonction du volume d'inclinaison attribué par probabilité calculé (*vol-prop*),
- dans lequel les instructions comprennent :

  - des instructions d'évitement pour contrôler un ensemble d'entraînements pour le mouvement de la tête de découpe laser selon une trajectoire tridimensionnelle pour un mouvement de la tête de découpe libre sans collision.

**13.** Contrôleur (C) selon la revendication précédente, dans lequel les instructions comprennent en outre :

- des instructions de séquençage pour générer une trajectoire modifiée en modifiant la séquence des parties à découper, sans modifier une imbrication et sans traverser une zone qui a été déterminée comme présentant un risque d'inclinaison, de telle sorte que la tête de découpe laser soit empêchée de traverser ou de croiser des zones qui ont été déterminées comme présentant un risque d'inclinaison ; et/ou
- des instructions d'imbrication pour générer une imbrication modifiée, en modifiant le plan de découpe (cp) pour fournir une imbrication modifiée pour les parties qui doivent encore être découpées en tenant compte du résultat de l'estimateur d'inclinaison (TE), à savoir le volume d'inclinaison attribué par probabilité (prob-vol).

**14.** Programme d'ordinateur comprenant un code de programme d'ordinateur, le code de programme d'ordinateur, lorsqu'il est exécuté par un processeur, amenant le processeur à réaliser les étapes du procédé selon l'une quelconque des revendications de procédé 1 à 11.

FIG. 1

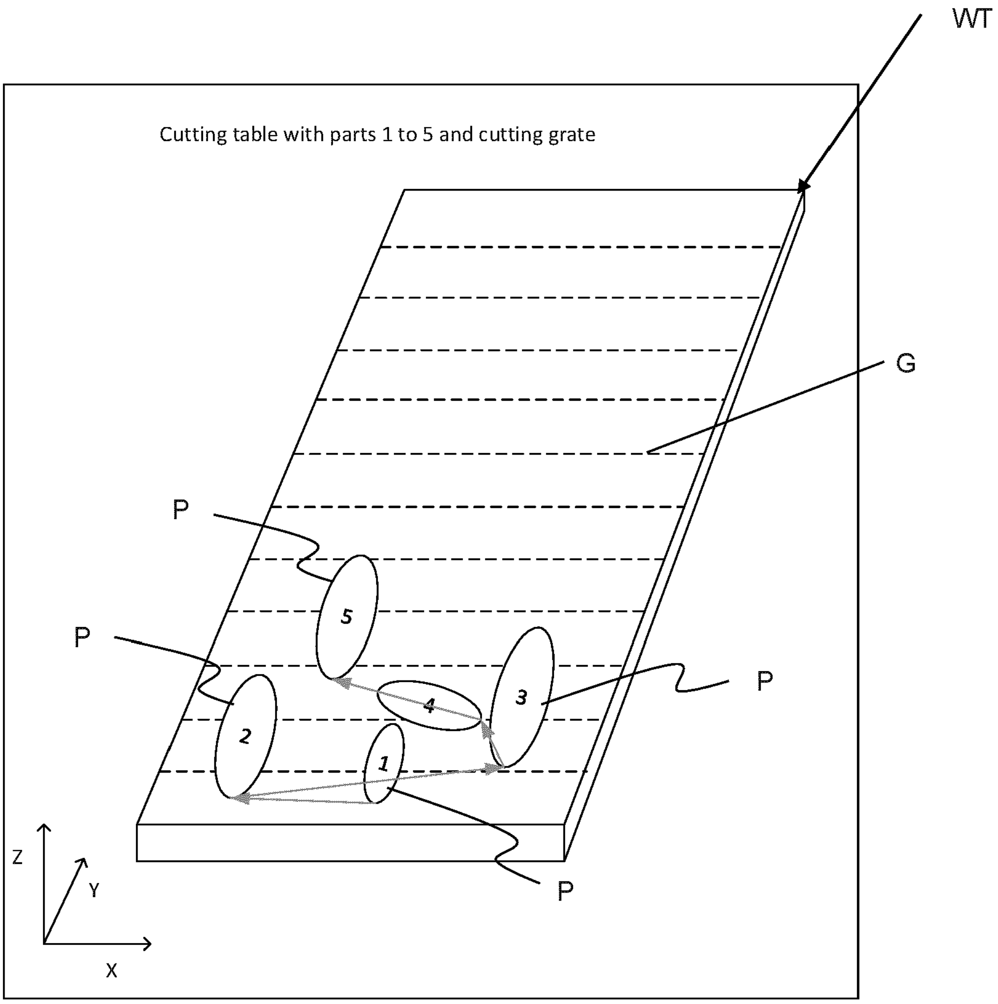
WT
Cutting table with parts 1 to 5 and cutting grate
G
P
P
P
P
5
4
3
2
1
Z
Y
X

FIG. 2

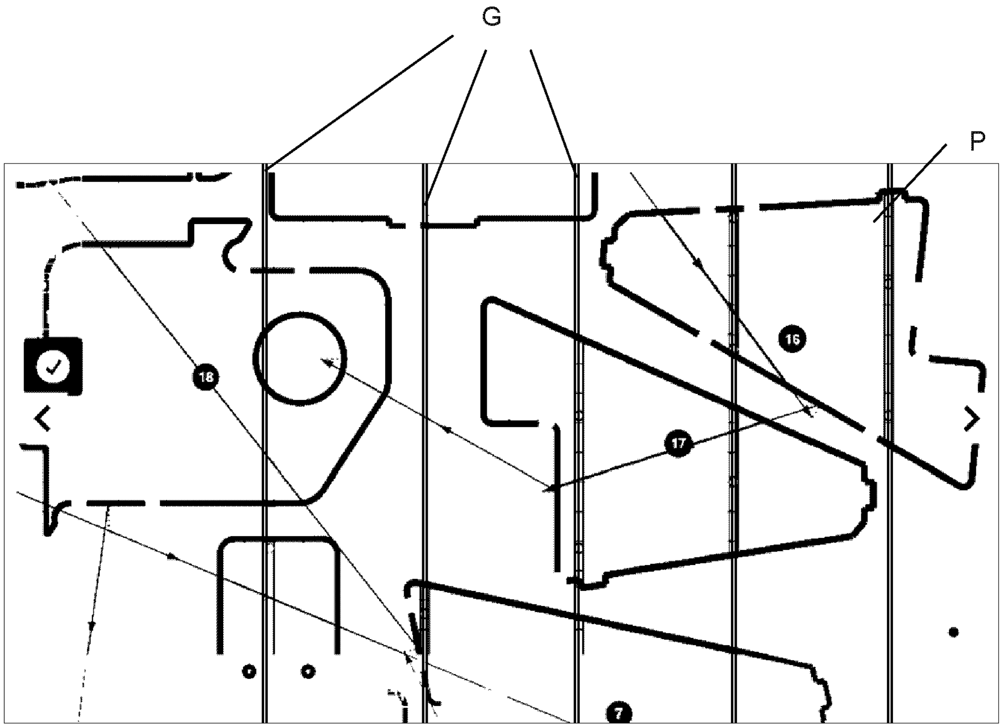

FIG. 3a

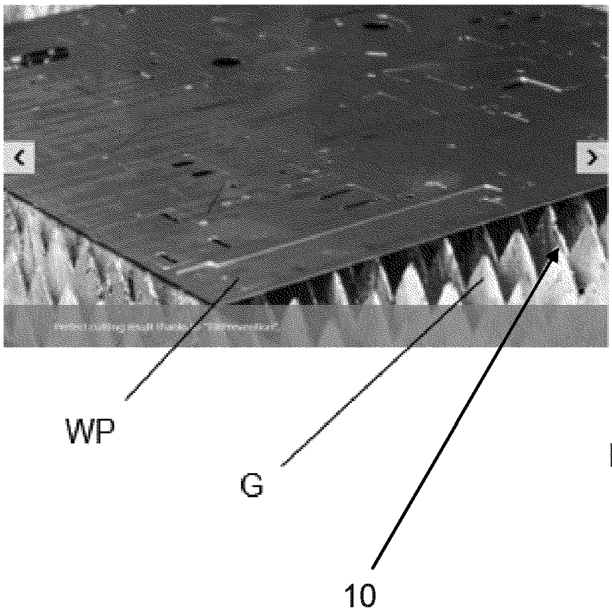


FIG. 3b

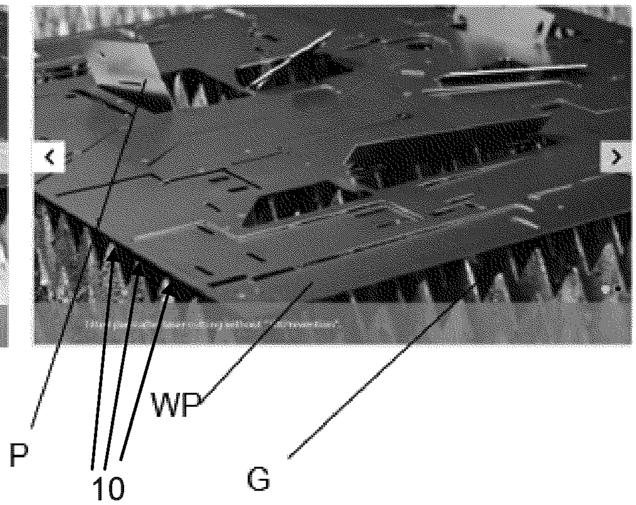

FIG. 4a

FIG. 4b

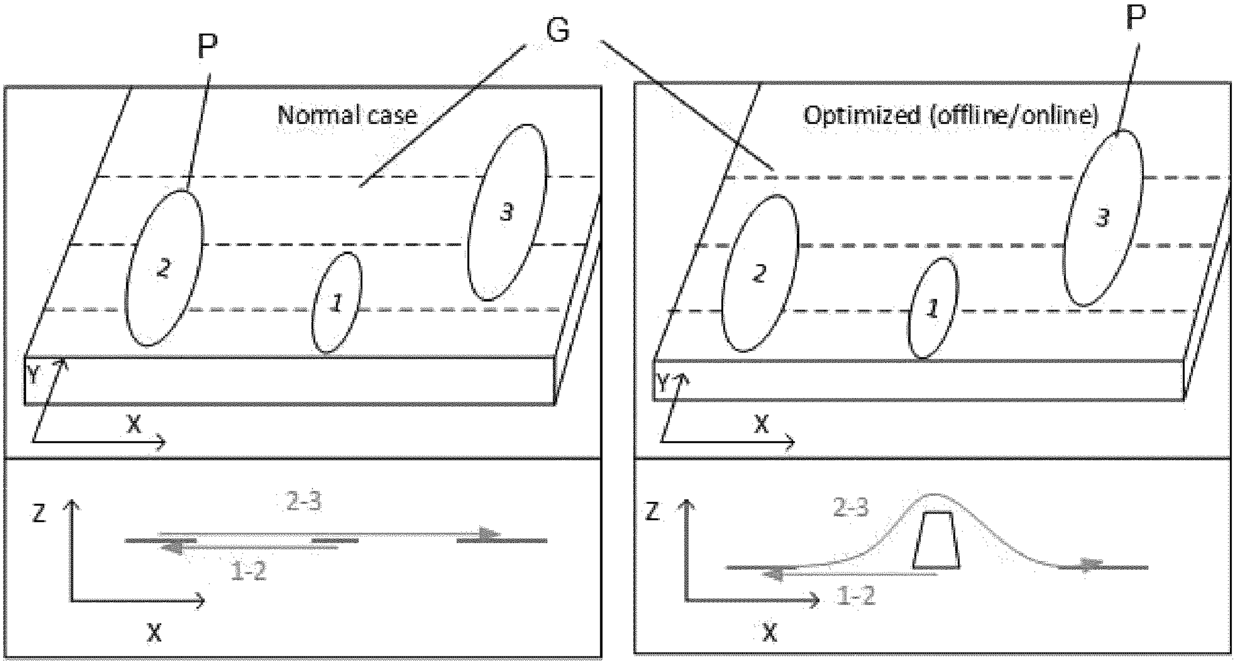

FIG. 5a

FIG. 5b

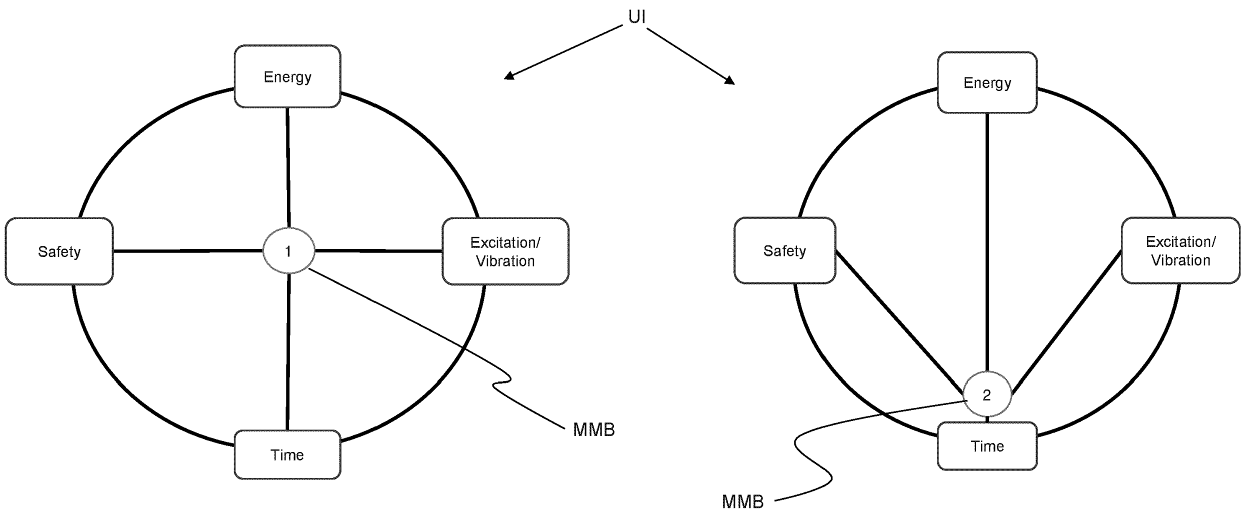
UI
Energy
Safety
1
Excitation/
Vibration
Time
MMB
Energy
Safety
Excitation/
Vibration
2
Time
MMB

FIG. 5c

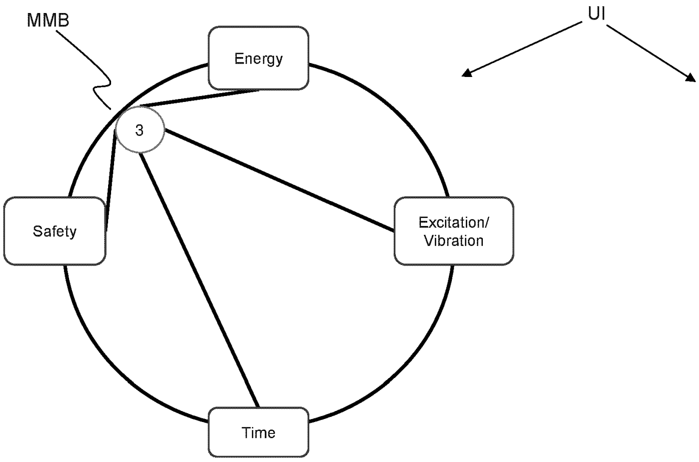
MMB
Energy
3
Safety
Excitation/ Vibration
Time
UI

FIG. 5d

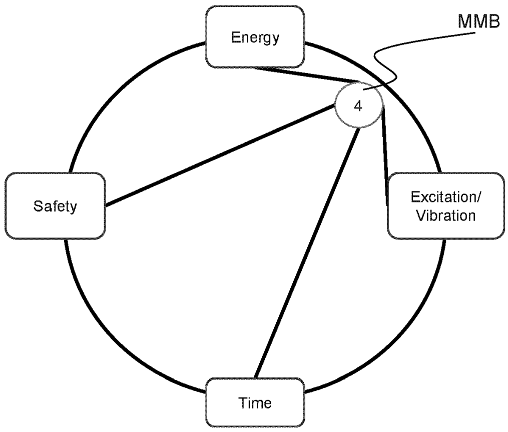
Energy
MMB
4
Safety
Excitation/ Vibration
Time

FIG. 6

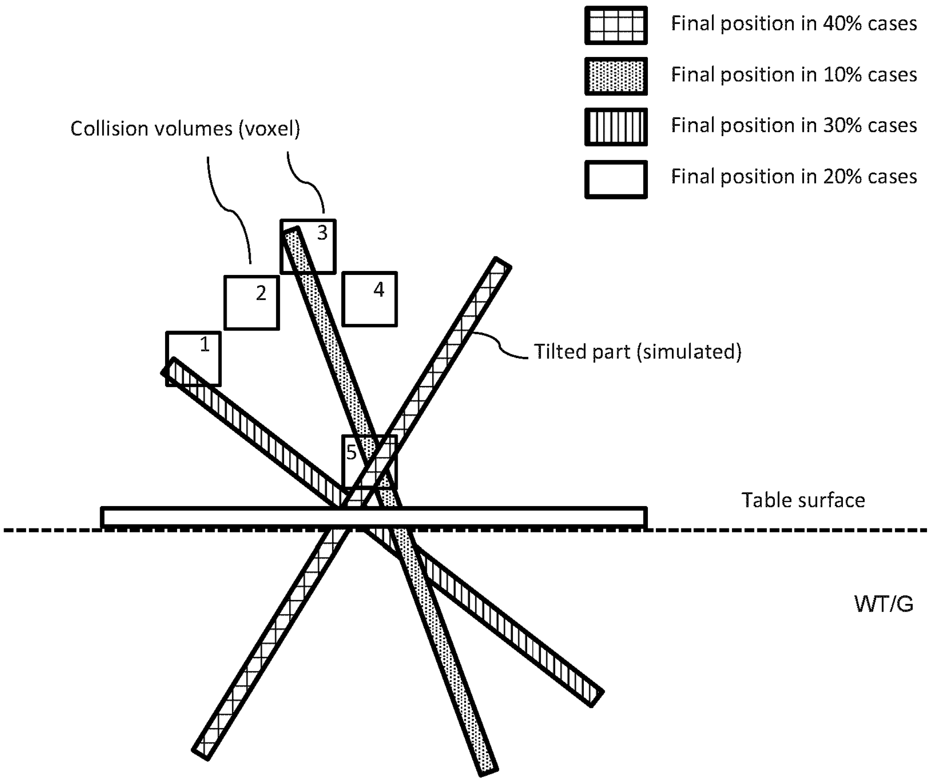
Final position in 40% cases
Final position in 10% cases
Final position in 30% cases
Final position in 20% cases
Collision volumes (voxel)
3
2
4
1
Tilted part (simulated)
5
Table surface
WT/G

FIG. 7a

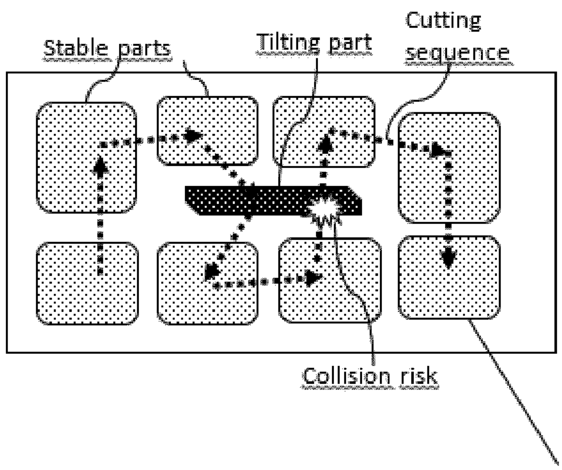


FIG. 7b

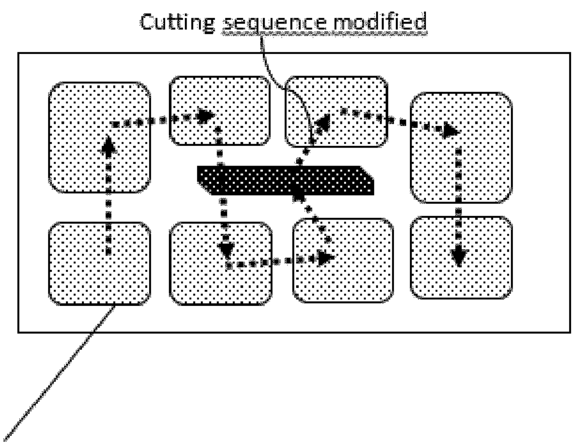


P

FIG. 7c

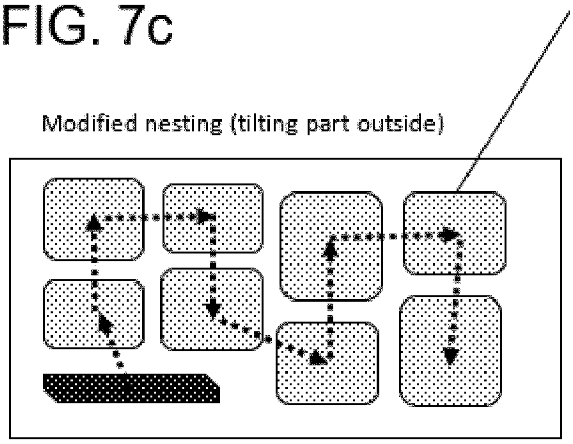

FIG. 8a

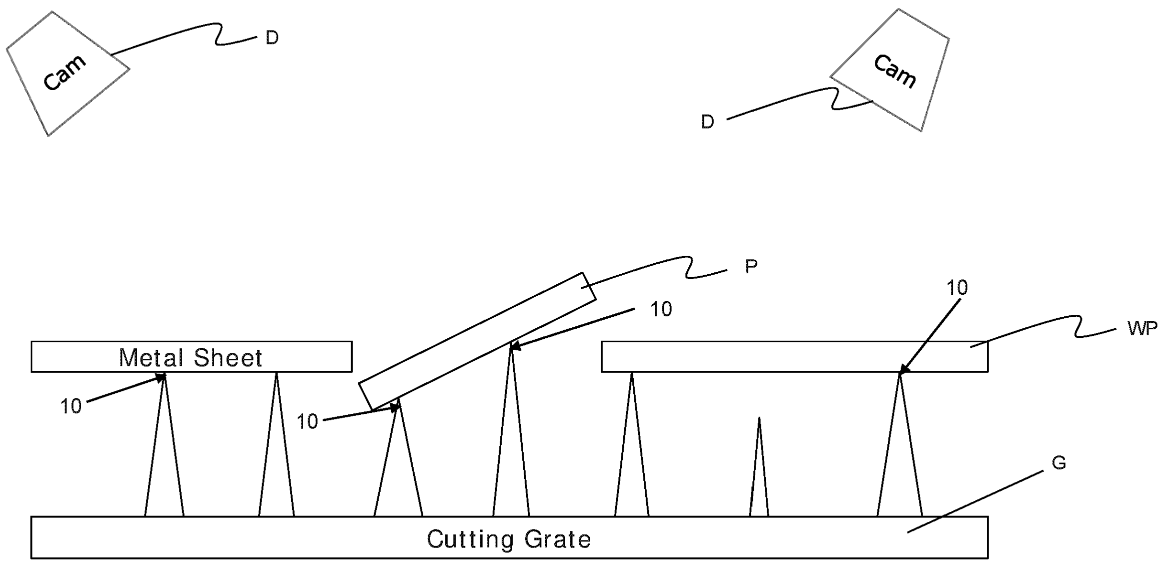

FIG. 8b

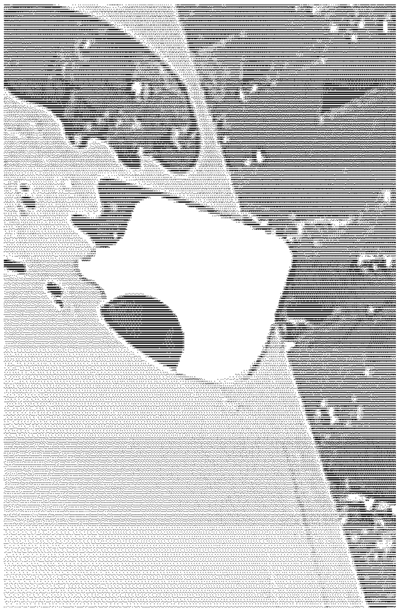

FIG. 9

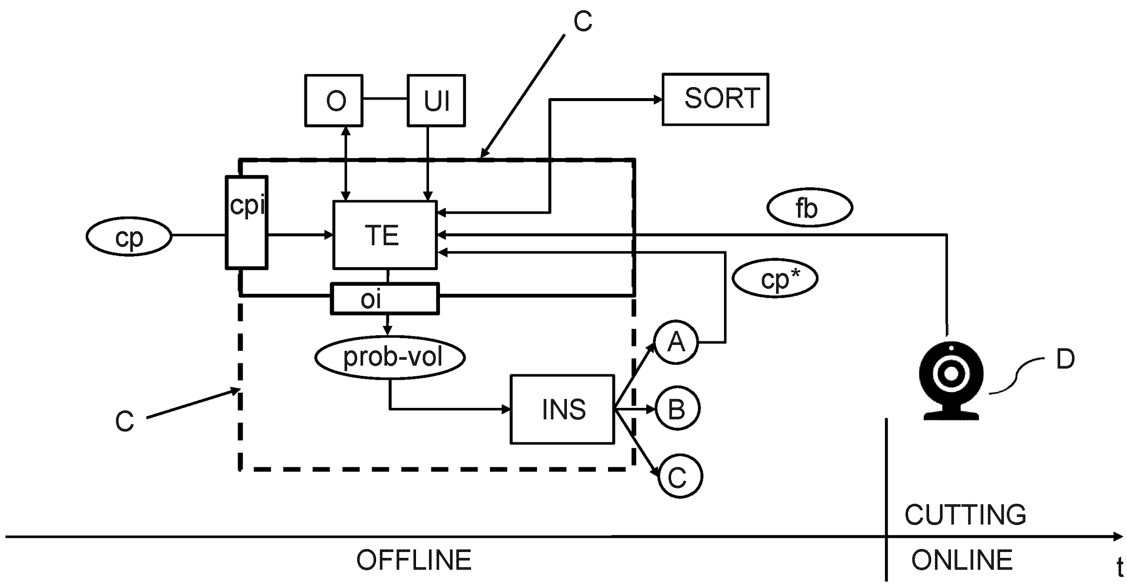
C
O
UI
SORT
fb
cpi
cp
TE
cp*
oi
A
prob-vol
D
C
INS
B
C
CUTTING
OFFLINE
ONLINE
t

FIG. 10

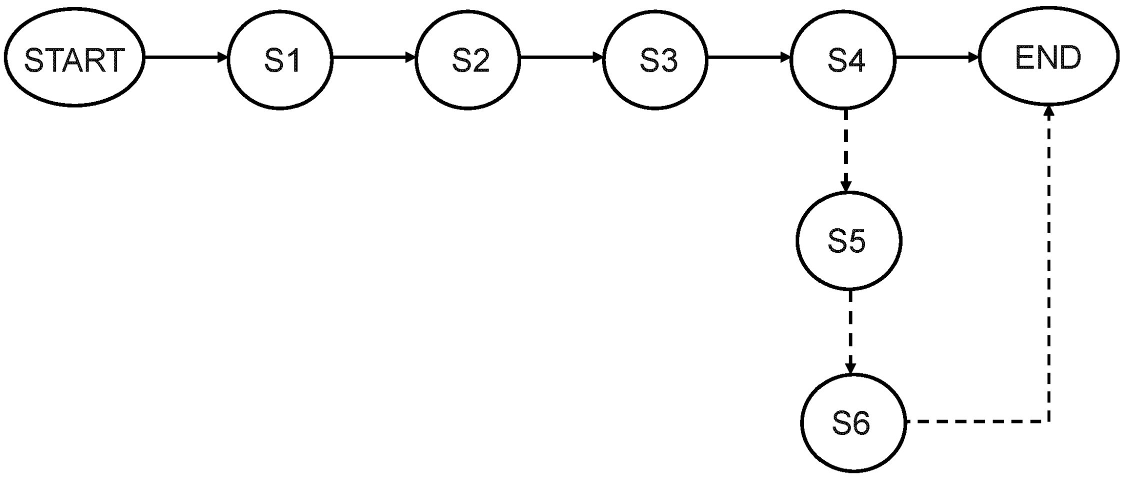

FIG. 11

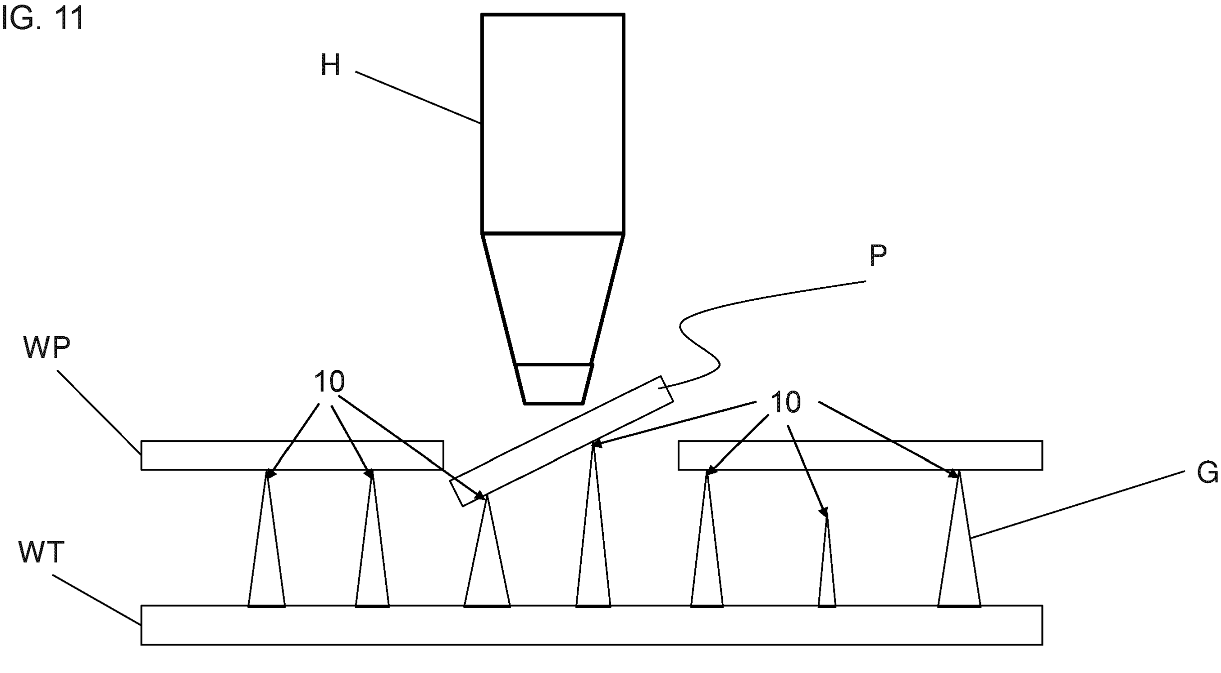

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- DE 102014200208 B3
- EP 3786736 A1
- WO 2020064589 A1
- DE 102018126077 A1
- US 6609044 B1